(19) Europäisches Patentamt
European Patent Office
Office européen des brevets

(11) **EP 2 430 500 B1**

(12) **EUROPEAN PATENT SPECIFICATION**

(45) Date of publication and mention
of the grant of the patent:
**14.07.2021 Bulletin 2021/28**

(51) Int Cl.:
***G05B 13/04*** (2006.01)   ***G05B 17/02*** (2006.01)

(21) Application number: **10725542.4**

(22) Date of filing: **14.05.2010**

(86) International application number:
**PCT/US2010/034833**

(87) International publication number:
**WO 2010/132731 (18.11.2010 Gazette 2010/46)**

(54) **INVERSE MODELING FOR CHARACTERISTIC PREDICTION FROM MULTI-SPECTRAL AND HYPER-SPECTRAL REMOTE SENSED DATASETS**

INVERS-MODELLIERUNG ZUR KENNGRÖSSENVORHERSAGE AUS MULTISPEKTRALEN UND HYPERSPEKTRALEN FERNERFASSTEN DATENSÄTZEN

MODÉLISATION INVERSE POUR LA PRÉDICTION DE CARACTÉRISTIQUES D'ENSEMBLES DE DONNÉES MULTISPECTRALES ET HYPERSPECTRALES DÉTECTÉES À DISTANCE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.05.2009 US 178251 P**

(43) Date of publication of application:
**21.03.2012 Bulletin 2012/12**

(73) Proprietor: **PIONEER HI-BRED INTERNATIONAL, INC.**
**Johnston, Iowa 50131-0552 (US)**

(72) Inventors:
• **LIGHTNER, Jonathan E.**
**Des moines, IA 50312 (US)**
• **WRIGHT, Steven L.**
**Urbandale, IA 50322 (US)**
• **VALVERDE, Federico**
**Caguas, PR 00725 (US)**

(74) Representative: **J A Kemp LLP**
**14 South Square**
**Gray's Inn**
**London WC1R 5JJ (GB)**

(56) References cited:
WO-A1-2005/019948     WO-A2-94/20887
WO-A2-02/097061       WO-A2-2005/045391
WO-A2-2008/097606     WO-A2-2009/059176
CN-A- 101 403 689     US-A1- 2005 043 902
US-A1- 2005 149 300   US-A1- 2006 190 137

• JACQUEMOUD S ET AL: "Comparison of four radiative transfer models to simulate plant canopies reflectance: Direct and Inverse Mode", REMOTE SENSING OF ENVIRONMENT, ELSEVIER, XX, vol. 74, 1 January 2000 (2000-01-01), pages 471-481, XP002196873, ISSN: 0034-4257, DOI: 10.1016/S0034-4257(00)00139-5
• P.M. Hansen ET AL: "Reflectance measurement of canopy biomass and nitrogen status in wheat crops using normalized difference vegetation indices and partial least squares regression", REMOTE SENSING OF ENVIRONMENT., vol. 86, no. 4, 1 August 2003 (2003-08-01) , pages 542-553, XP055696436, XX ISSN: 0034-4257, DOI: 10.1016/S0034-4257(03)00131-7

**EP 2 430 500 B1**

## Description

TECHNICAL FIELD

The present invention relates to the fields of inverse modeling and to agricultural crop management.

## BACKGROUND

There is interest in predicting agronomic traits in plants. Such predictions attempt to provide, with reasonable accuracy, an estimate of some quantitative or qualitative aspect of a particular trait or a plant. This estimate may in turn be used, for example, to select or to remove certain plants from a larger population.

One way to obtain data from which predictions can be made is with remote sensing. A variety of remote sensing methods exist. One method involves the imaging of reflectance from a plant or plants in the electromagnetic spectrum (*e.g.,* visible (VIS), infrared (IR), near infrared (NIR), ultraviolet (UV)) to capture and/or isolate absorption values for a targeted wavelength (spectra) of the electromagnetic spectrum. One exemplary remote sensing system is described in U.S. Patent No. 7,038,191.

Some have sought to use remote sensing to predict yield in seed-bearing plants. Many existing predictive methods are "classical" or "reverse" in that one starts with certain *a priori* information and/or assumptions (e.g., that a plant's spectrum taken at a certain wavelength is indicative of the plant's yield because of a certain reflective parameter of chlorophyll) and then goes back (i.e., "reverses") and builds a model based on the assumptions. The assumptions are based on a classical paradigm of scientific theory-create a hypothesis related to cause and effect, obtain specific data indicated as relevant by the hypothesis (e.g., the pre-determined single wavelength), and then generate a prediction model which can be used to evaluate the same specific data from a new sample (e.g., make a yield prediction).

Measurements that are deemed relevant are predetermined based on the underlying hypothesis and scientific theory. Such a methods is sometimes called a deterministic or causal model-building method, because the model depends, from the beginning, on predetermined assumptions about cause and effect.

Most reverse- or classical-based models generate predictive functions based on synthesis of first principals. When using the model to make a prediction, this suitably requires collection of data from only one or a few specific, discrete spectral wavelengths (those that comport with the predetermined significant inputs), as opposed to ranges or regions of wavelengths.

Much work must be done to first identify the relevant functions to base the model, and then to build the model-thus the name "reverse modeling". This "reverse modeling" approach requires significant time and resources on the front end of the model-building to develop the theory or hypothesis by valid scientific method. It is usually not simply a matter of hypothesizing and then implementing the theory. Much trial and error and empirical experimentation are also needed to support the scientific theory. The theory is normally based, at least in significant part, on *a priori* knowledge or work, and after such work is performed, the reverse model scientific theory can be tested to validate it. Even if the model is changed after testing, it is still based on *a priori* assumptions, tests, or information.

In essence, reverse or classical modeling requires the time and resources to come up with functions relating inputs needed to make a prediction. The processes to identify those functions can be laborious. For example, for the phenotype of leaf chlorophyll concentration, the constants may be absorption values at no more than from one to a few relatively discrete wavelengths. But it may take a long time to hypothesize which is/are the appropriate wavelength(s) and to determine whether to use those discrete wavelengths to predict leaf chlorophyll concentration. The classic approach, and thus the ultimate prediction model, would need to explain why certain spectra are related to leaf chlorophyll concentration.

Additionally, the assumption that those few wavelengths fully and accurately predict leaf chlorophyll concentration of a particular plant do not account for the possibility there may be other reasons and, in particular, other reasons that may be discerned from other spectra. Thus classical or reverse modeling may not take into account, and may completely miss, important factors involved in leaf chlorophyll concentration. The modeling is "locked in" or narrowed into the *a priori* assumptions used to build it (thus, it is deterministic or causal). The classical model assumes an understanding of everything about a system (e.g., what determines leaf chlorophyll content in a plant) and a hypothesis and model are built upon that assumption.

With vegetation - including but not limited to plants in plant breeding and genetic advancement experiments - remotely-gathered sensing data from the vegetation is fundamentally physical-based and is driven principally by the reflectance properties of leaves and the structure of a vegetation canopy. Application of remote sensing data for plant breeding and plant advancement experiments has centered on classical modeling relative to phenotypes of interest. Such modeling assumes a target specific spectral resolution and range, which may ignore important information in other spectral regions.

Accordingly, there is thus a need in the art for using spectroscopic data sensing to predict phenotypic traits, constituents, or other characteristics in or of plants. Accordingly, there is a need in the art for methods of predicting plant characteristics (e.g., phenotypes, genotypes, and the like) that do not suffer from the limitations of classical reverse modeling techniques. The value of such methods would be enhanced if the methods could operate using remotely (e.g., non-invasively) gathered data, particularly data that is gathered at some distance from the plant or plants of interest. There is also a related need for devices for performing such methods.

US 2006/190137, WO 2008/097606, WO 02/97061, WO 94/20887, WO 2009/059176, WO02/97061, CN101403689, "Comparison of Four Radiative Transfer Models to Simulate Plant Canopies Reflectance: Direct and Inverse Mode" by S. Jacquemoud et al., and "Reflectance measurement of canopy biomass and nitrogen status in wheat crops using normalized difference vegetation indices and partial least squares regression" by P.M. Hansen et al. disclose background art.

SUMMARY

The invention is defined in claims 1 and 14. Further aspects and preferred embodiments are defined in the dependent claims. Any aspects, embodiments and examples of the present disclosure which do not fall under the scope of the appended claims do not form part of the invention and are merely provided for illustrative purposes.

Provided are methods, apparatuses, and systems for constituent or characteristic prediction from multi-spectral and hyper-spectral remote sensing datasets taken from plants. These methods, apparatuses, and systems represent improvements over the state of the art. The present invention also:

- generates models that can be used for real-time prediction and classification;
- builds a predictive model quicker than classical modeling;
- can calculate reasonably quickly with reasonable computational overhead;
- does not require the type of *a priori* knowledge required of classical modeling;
- does not always require a laboratory environment or extensive research;
- can be used to exclude or predict quickly;
- allows early predictions;
- may help identify or predict new correlations or explanations for constituent activity;
- can be used on plant-by-plant basis or multiple plant basis;
- is conducive to building stable, robust, and reasonably accurate prediction models;
- can provide for automatic or semi-automatic model building;
- can provide for automatic detection of outliers and handling of outliers, errors in data, and anomalies;
- can produce good results even in the presence of substantial interference (e.g., chemical interference in samples, physical interference in samples, interference from measurement process, mistakes, unexpected phenomena);
- can handle a variety of different data sizes or number of samples, amount of variables, etc.;

- allows for indirect observation to make predictions after model-building;
- is quite flexible in application and use;
- allows for a variety of validation and improvement techniques;
- can provide reliable prediction of needed information at the right time for an acceptable cost;
- allows for quantitative, interactive analysis, along with optional qualitative analysis;
- allows visualization of variables, and evaluation of the same;
- allows for pretreatments of data;
- allows for classification of prediction results; and
- can provide improved understanding of processes

One method comprises creating a predictive model of a plant characteristic, including but not limited to a constituent, a phenotype, health, physiology, or combinations thereof, by (a) building a model with inverse modeling principles based on multivariate chemometric analysis of spectroscopic imaging or remote sensing of a calibration or training data set or sets and corresponding independently directly measured constituent, characteristic, phenotype, health, or physiology reference values as input variables; (b) optionally testing or validating the model; and (c) applying the validated model to a spectroscopic or remote sensed test data set from a plant or plants of interest. One example of an inverse modeling is partial least squares regression analysis. Others can be used. The spectroscopic or remote sensed data can be, but is not limited to, multi-spectral or hyper-spectral data. The predictive model can be validated through a number of methods. One example is cross-validation. Another is use of one or more calibration or validation data sets or methods to improve the model, such as make it more stable, robust, and/or accurate and precise. The inverse predictive model can be used to develop a wider understanding of factors that influence the constituent, characteristic, phenotype, health, or physiology of interest of the plant.

One exemplary apparatus includes (a) a computer with a memory adapted to store a database of spectroscopic or remote sensing training set data, and a database adapted to store a measured constituent, characteristic, phenotype, health, or physiology value for at least a plurality of the calibration or training set data; (b) software that includes a mathematical transform algorithm operated on the computer and adapted to build an inverse model for prediction of constituent, characteristic, phenotype, health, or physiology based on the calibration or training set and measured reference data; and (c) a database to store a spectroscopic or remote sensed test data set for input into the prediction model to generate a prediction of the value of the constituent, characteristic, phenotype, health, or physiology which is unknown in a sample comprising a plant or plants.

In another example, a system includes (a) a remote sensing or spectroscopic sensor adapted to sense and/or record spectroscopic or remote sensing data, (b) a computer adapted to store and read the sensed and/or recorded spectroscopic or remote sensed data; (c) an algorithm operated on the computer and adapted to build an inverse modeled prediction of constituent, characteristic, phenotype, health, or physiology from a calibration set of the sensed and associated measured reference data; (d) an input to the computer to input to the model a spectroscopic or remote sensed test data set for prediction of the constituent, characteristic, phenotype, health, or physiology of interest.

Several non-limiting examples of characteristics that are predicted with the above methods, apparatuses, or systems are chlorophyll concentration, leaf moisture content, and photosynthesis activity. Several examples of characteristics that are predicted include amount of introgression in a back-crossing experiment and drought stress tolerance.

## BRIEF DESCRIPTION OF THE DRAWINGS

The summary, as well as the following detailed description, is further understood when read in conjunction with the appended drawings. For the purpose of illustrating the invention, there are shown in the drawings exemplary embodiments of the invention; however, the invention is not limited to the specific methods, compositions, and devices disclosed. In addition, the drawings are not necessarily drawn to scale. In the drawings:

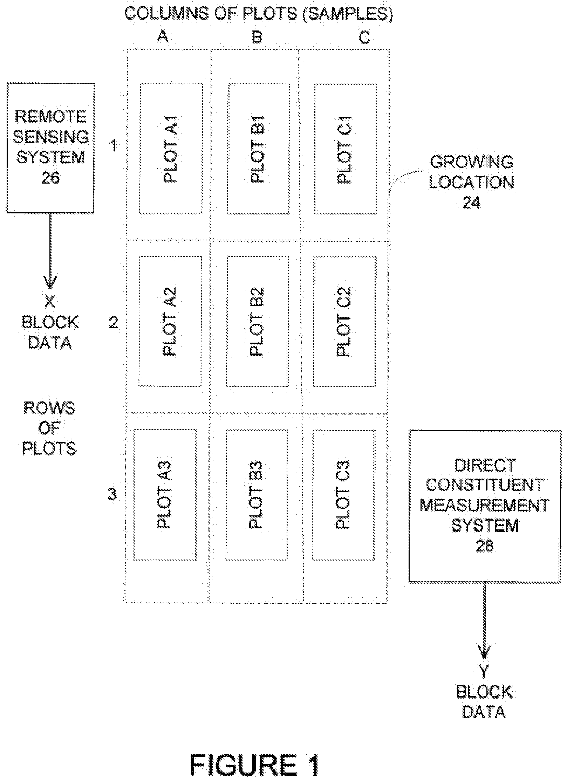

Figure 1 illustrates (a) a plurality of samples for use in building a calibration model, here a plurality of growing plots of maize plants, (b) a remote sensing system for obtaining a calibration set of input variables (what will sometimes be referred to as X-block data) for the calibration model (here multi-spectral or hyper-spectral data from remote sensed images of the different plots), and (c) a constituent measurement system for obtaining a reference set of dependent variables (what will sometimes be referred to as Y-block data) for the calibration model, here direct measurements of a constituent of interest from at least one plant of each plot, all according to an exemplary embodiment of the present invention.

Figure 2 is a schematic representation of a spectral imaging hypercube showing the relationship between spatial and spectral dimensions of spectroscopic data obtained from images of the samples obtained by the multi- or hyper-spectral remote sensing system of Figure 1. The X-block data for the calibration model is extracted from this information.

Figure 3 is a diagram of a computerized system, that may include multivariate analysis software, to develop a calibration model for the constituent of interest from the calibration (X-block) and reference (Y-block) data sets, and to then make predictions of the constituent of interest from test data sets of remote sensed multi- or hyper-spectral images of new sample plants or plots.

Figures 4A and B are examples of graphic user interfaces (GUIs) from commercially available software that can be used with the computer system of Figure 3 to build the predictive model from the X-block and Y-block data sets and then make predictions from test data sets. The GUIs illustrate various features, including visualizations of the modeling procedure and validation of the modeling results.

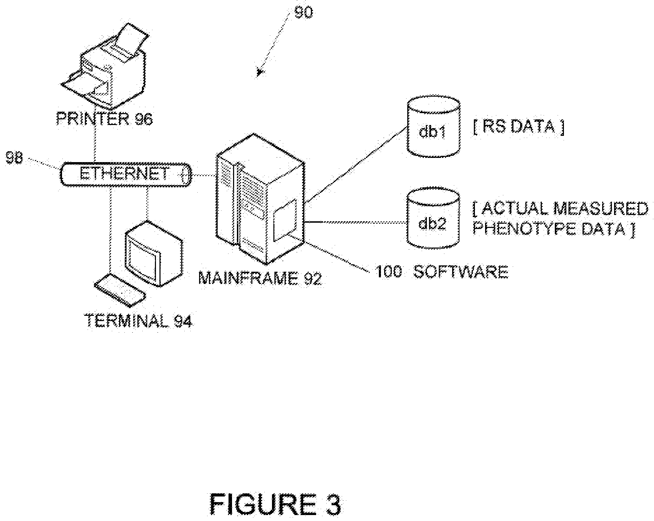

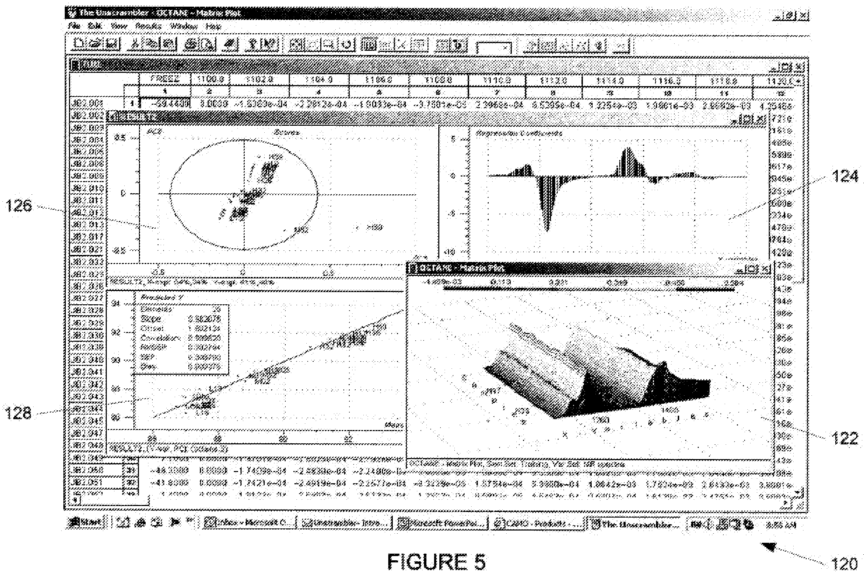

Figure 5 illustrates exemplary GUIs from commercially available multivariate analysis software suitable for use with the system of Figure 3. The illustrations include a visualization of remote sensed spectral calibration data from a plurality of samples (X-block data) relative to one another revealing similarities and variations between each spectra (lower right); a plot of regression coefficients calculated by the software from the spectral data (upper right); a plot of principal component scores calculated by the software (upper left); and a cross validation plot of predicted values from the model versus actual measured values of the constituent of interest, based on a number of latent variables determined by the software.

Figure 6 is a flow chart of an exemplary, prior art classical- or reverse-based modeling method for predicting a constituent of interest.

Figure 7 is a flow chart according to a generalized exemplary embodiment of the present invention for (a) using inverse modeling to build a model for predicting a constituent of interest from a calibration set of remote sensed multi- or hyper- spectral data (X-block data) and actual measurements of the constituent for plants from the plots (Y-block data) of Figure 1, and (b) then using the model to predict the constituent of interest from a multi- or hyper-spectral test data set.

Figure 8 is similar to Figure 7, but includes an added optional validation process applied to the inverse modeling of Figure 7.

Figures 9A and 9B are similar to Figure 7 but include an optional validation process applied to the inverse modeling of Figure 7.

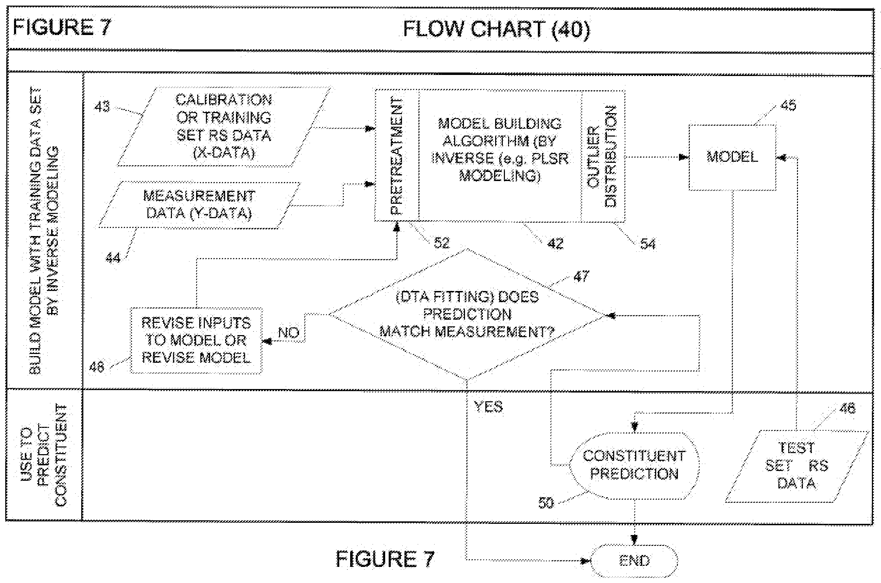

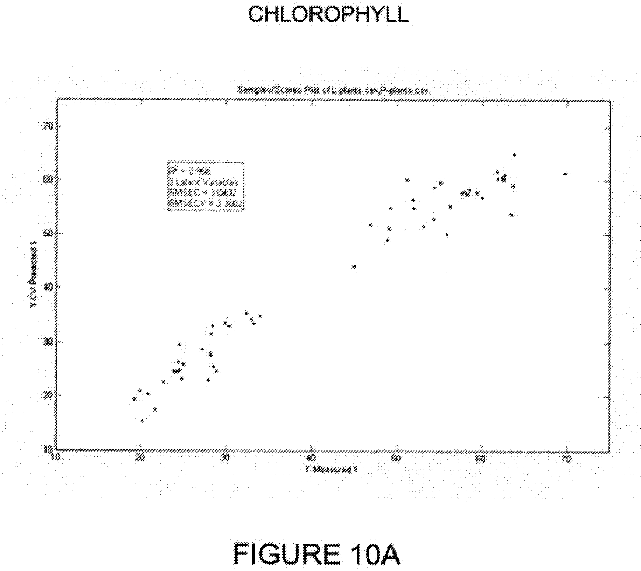

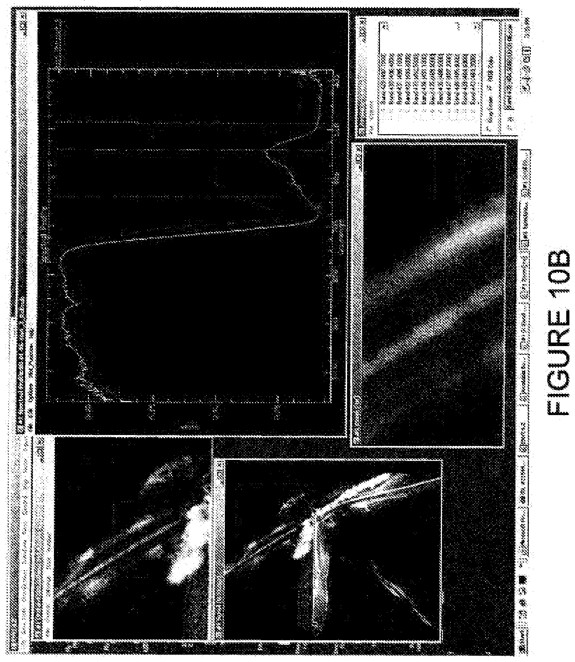

Figure 10 illustrates the correlation between actual measured chlorophyll concentration for a set of maize plants versus a prediction of chlorophyll concentration utilizing a Partial Least Squares (PLS) inverse modeled function. Figure 10A is a cross-validation plot for a first specific exemplary embodiment of the present invention relating to using a method of Figures 7, 8, or 9 to predict the concentration level of chlorophyll, as the constituent of interest, in a maize plant or plants. Figure 10B is an exemplary computer display that allows visualization of the hyperspectral data in an red, green and blue three color image for selection of pixels to calculate the plant spectrum.

Figure 11 is a cross-validation plot similar to Figure 10, but includes a second specific exemplary embodiment of the present invention relating to using a method of Figures 7, 8, or 9 to predict the concentration level of leaf moisture content (the constituent of interest) in a maize plant or plants.

Figure 12 is a cross-validation plot similar to Figure 10 but includes a third specific exemplary embodiment of the present invention, here using a method of inverse modeling of the type of Figures 7, 8, or 9 to predict the relative degree or level of introgression of a gene, as the constituent of interest, in a backcrossing experiment of maize plants. Figure 12 illustrates degree of correlation between actual measured level of genome introgression for a set of hybrid maize plants versus a prediction of level of genome introgression utilizing a Partial Least Squares (PLS) inverse modeling.

Figure 13 is a temporal plot related to a fourth specific exemplary embodiment of the present invention for predicting level of photosynthesis activity over time in a maize plant.

Figure 14 is a plot relating to a fifth specific exemplary embodiment of the present invention, namely the prediction of relative level of drought-stress in maize plants using inverse modeling and classifying the samples by discriminant analysis.

Figure 15 is a flow chart illustrating use of one or more of the predictions of some of the specific examples in plant breeding, a genetic advancement experiment, or selection process for determining amount of commercial production of maize seed.

Figure 16 is a plot relating to the prediction of soybean genotypes' growth in a controlled environment using inverse modeling and classifying the samples by discriminant analysis.

Figure 17 is a plot of the cross validation predictions of the perturbation in the plants produced by different events and constructs of a transgene. A single construct with many events is contrasted with the wild type. Discrimination analysis indicates clearly modeled changes in the plants' hyperspectral images for the transgenic plants compared to the wild type plants.

Figure 18 is a plot of the cross validation predictions similar to Figure 17. In this case the separation between the wild type and transgenic is only possible for a limited number of events highlighted in the dashed ellipse.

Figure 19 is a plot of the cross validation predictions of the perturbation in different genotypes produced by a single transgenic event. Discrimination analysis indicates clearly modeled changes in the plants' hyperspectral images from the transgenic event.

Figure 20 is a plot of the attempted cross validation for a second genotype, like Figure 20. In this case, however, separation between the two classes wild type and transgenic is not possible based on the hyperspectral images of the plants.

## DETAILED DESCRIPTION

The invention made is disclosed in the attached set of independent claims. Further embodiments are disclosed in the set of dependent claims. The present invention may be understood more readily by reference to the following detailed description taken in connection with the accompanying figures and examples, which form a part of this disclosure. It is to be understood that this invention is not limited to the specific devices, methods, applications, conditions or parameters described and/or shown herein, and that the terminology used herein is for the purpose of describing particular embodiments by way of example only and is not intended to be limiting of the claimed invention.

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another embodiment includes from the one particular value and/or to the other particular value. Similarly, when values are expressed as approximations, by use of the antecedent "about," it will be understood that the particular value forms another embodiment. All ranges are inclusive and combinable.

It is to be appreciated that certain features of the invention which are, for clarity, described herein in the context of separate embodiments, may also be provided in combination in a single embodiment. Conversely, various features of the invention that are, for brevity, described in the context of a single embodiment, may also be provided separately or in any subcombination. Further, reference to values stated in ranges include each and every value within that range.

*Terms*

As used herein, "backcrossing" refers to a process in which a breeder crosses a hybrid progeny variety back to one of the parental genotypes one or more times.

As used herein, "backcross progeny" refers to progeny plants produced by crossing a recurrent parent with plants of another line that comprise a desired trait or locus, selecting F1 progeny plants that comprise the desired trait or locus, and crossing the selected F1 progeny plants with the recurrent parent plants one or more times to produce backcross progeny plants that comprise said trait or locus.

The term "breeding" refers to genetic manipulation of living organisms.

The term "breeding cross" refers to a cross to introduce new genetic material into a plant for the development of a new variety. For example, one may cross plant A with plant B, wherein plant B is genetically different from plant A. After the breeding cross, the resulting F1 plants may then be selfed or sibbed for one, two, three or more times (F1, F2, F3, etc.) until a new inbred variety is developed. For clarification, such new inbred varieties would be within a pedigree distance of one breeding cross of plants A and B.

As used herein, the term "characteristic" refers to any phenotypic or genotypic feature of a plant. Such features include, for example, yield, height, a chemical level, a level of introgression, a constituent (physical or genetic), a transgenic trait, and any combinations of these. For example, a characteristic may be glyphosate resistance, an oil phenotype, or a combination of these two. A characteristic may be a feature that is considered desirable (e.g., yield) or negative (e.g., yield drag).

The term "crossing" refers to the combination of genetic material by traditional methods such as a breeding cross or backcross, but also including protoplast fusion and other molecular biology methods of combining genetic material from two sources.

The term "F1 progeny" refers to progeny plants produced by crossing a first plant with a second plant, wherein the first and the second plants are genetically different.

The term "genotype" refers to the genetic constitution of a cell or organism.

"Hybrid variety" refers to a substantially heterozygous hybrid line and minor genetic modifications thereof that retain the overall genetics of the hybrid line including but not limited to a locus conversion, a transgene insertion, a mutation, or a somoclonal variant.

The term "inbred" refers to a variety developed through inbreeding or doubled haploidy that typically comprises homozygous alleles at about 95% or more of its loci.

As used herein, "introgression" means the process of transferring genetic material from one genotype to another. This term is intended to include the heterozygosity or homozygosity at a locus (e.g., for a marker, for a quantitative trait locus, or for a transgene) as well as overall genetic background in the backcrossing (e.g., percentage of elite background).

As used herein, "spectroscopic data" means spectral data taken at one or more wavelengths. Such data may be gathered remotely, e.g., by a device positioned at a distance from the subject plant or plant population. Spectroscopic data includes absorbance, reflectance, or intensity data, or even a combination of two or more of these. The data may be gathered under ambient conditions, or may be gathered with the assistance of a supplemental illumination source.

Chemometrics is the application of mathematical or statistical methods to chemical data. The International Chemometrics Society (ICS) offers the following definition:

> Chemometrics is the science of relating measurements made on a
> chemical system or process to the state of the system via application of mathematical or statistical methods.

Chemometric research includes different methods which can be applied in chemistry. There are techniques for collecting good data (optimization of experimental parameters, design of experiments, calibration, signal processing) and for getting information from these data (statistics, pattern recognition, modeling, structure-property-relationship estimations).

Chemometrics is considered a species of computational chemistry, which is a branch of chemistry that uses computers to assist in solving chemical problems. Computational chemistry uses the results of theoretical chemistry, incorporated into efficient computer programs, to calculate the structures and properties of molecules and solids. While its results normally complement the information obtained by chemical experiments, it can in some cases predict previously unobserved chemical phenomena.

One example of its use is in the design of new drugs and materials. An example of such properties is spectroscopic quantities. The methods employed cover both static and dynamic situations. In all cases computer analysis time increases rapidly with the size of the system being studied.

Chemometrics bridges methods such as spectroscopy and their application in chemistry. In spectroscopy, the applications of chemometrics is most often in calibration. Calibration is achieved by using the spectra as multivariate descriptors to predict concentrations of constituents of interest using statistical approaches such as Multiple Linear Regression (MLR), Principal Components Regression (PCR), and Partial Least Squares (PLS). One work in this area is Martens, H. and Naes, T., "Multivariate Calibration", John Wiley & Sons (Chichester 1989) (referred herein to as "Martens and Naes 1989" or as "Martens and Naes).

Spectroscopic analysis can provide easy, non-destructive qualitative and quantitative results, requiring little or no sample preparation. It is cost-effective, consistent, reliable, and meets government regulatory and compliance standards for many industrial applications.

Plant breeders, physiologists, and scientists, however, are not generally skilled in the remote sensing science or methods. Nor are they generally skilled in spectroscopy or chemometrics and, thus, have relied on classical-based modeling for analysis of plants.

One reason is that inverse modeling with multivariate analysis chemometrics does not provide a direct interpretation of the source of the prediction. Therefore, compelling reasons have not existed to utilize such chemometric methods to analyze remote sensing spectral data related to plant breeding or genetic advancement experiments. It is, however, counterintuitive to look in that direction. For example, historically, it has been shown that the more chlorophyll in a maize plant, the higher the yield of seed from the plant is likely. It has been long known where the constituent chlorophyll absorbs certain specific wavelengths of light, so those are analyzed when building a classical model to predict yield in a growing maize plant.

Methods of estimating a plant characteristic are provided; the term "characteristic" is defined elsewhere herein and in meant to include both phenotypic and genotypic features. These methods suitably include constructing a predictive model using inverse modeling based at least in part on a first set of spectroscopic data from a first plant population and on corresponding measured (or estimated) characteristic data sets from the first plant population. For example, the first data set may be spectra taken from a series of plants having known or estimated levels of drought resistance. The spectra may be taken from plants of different ages or even of different levels of stress. The first set of data may, in some examples, be treated as a calibration data set upon which the model is based.

While the calibration data suitably includes data based on direct measurements (e.g., actual measurements of chlorophyll), the data may also include data points that are based on estimates or predictions. For example, the user may utilize calibration data that are based on an estimate of chlorophyll in the first plant or plant population, rather than a direct measurement of the chlorophyll.

Any portion or all of the spectroscopic data used in the models may be gathered remotely. Remote sensing is generally short or large-scale acquisition of information of an object or phenomenon by the use of either a recording or real-time sensing device(s) that is/are not in physical or intimate contact with the object or phenomenon (e.g., by way of scaffold, cherry picker, crane, aircraft, spacecraft, satellite, buoy, or ship). Remote sensing usually refers to the use of imaging sensor technology. The imaging sensor can involve passive collection to detect natural energy (e.g., radiation) that is emitted or reflected by the object or surrounding area being observed.

Examples include, but are not limited to, photography devices, infra-red sensors, charge-coupled devices, radiometers, and the like. By contrast, active collection systems emit energy in order to scan objects and areas whereupon a passive sensor then detects and measures the radiation that is reflected or backscattered from the target (e.g., RADAR). Attempts have been made to use remote sensing for deriving traits or characteristics of plants with classical or reverse modeled predictions. See, e.g., U.S. Patent 7,112,806.

A common mode of light energy collection is referred to as multi-spectral data. Several independent bands of spectra can be collected. It can be obtained with the following types of devices or sensors: (a) conventional RADAR, (b) laser and RADAR altimeters on satellites, (c) LIDAR light detection and ranging, (d) radiometers and photometers (e.g., visible and infrared sensors, microwave, gamma ray, ultraviolet, emission spectra of various chemicals), (e) stereographic pairs or aerial photographs, (f) simultaneous multi-spectral platforms such as Landsat.

More recently, hyperspectral imaging or what is sometimes termed imaging spectroscopy, spectral imaging or chemical imaging has been developed. Imaging spectroscopy is simultaneous acquisition of spatially co-registered images in many spectrally contiguous bands. The image produced by imaging spectroscopy is similar to an image produced by a digital camera, except each pixel has many bands of light intensity data instead of just three bands: red, green, and blue. Hyper spectral data sets can be composed of a relatively large number (e.g., 100-1000 spectral bands of relatively narrow bandwidths (e.g., 1-10 nm), whereas, multi-spectral data sets are usually fewer (e.g., 5 to 10) bands of relatively large bandwidths (e.g., 70-400 nm). One of the issues researchers have faced is sorting, organizing, and using such massive amounts of data.

In some examples, the present invention includes analysis of an image of a plant. Such analysis may be used to determine a number of different phenotypic characteristics, including but not limited to leaf angle, leaf width, number of nodes, internode length, branching, plant height, ear height, flowering time, anthesis-silking interval (ASI), staygreen ability, growth rate, total biomass, partial (e.g., leaf, root, stem) biomass, and/or pollen shed date. Some of these traits (e.g., ASI, anthesis) can be scored with high precision manually (by recording the respective dates of anthesis and silking by making daily observations). In some examples, the analysis may include generating a model based on spectra data and including information in the model related to a characteristic of the plant that is observed in the image, such as leaf width. The model will then include information gleaned from spectra and information gleaned from observation of the plant's image. The image analysis may be performed manually or in an automated fashion. For example, the user may use an image analysis algorithm to determine the average leaf width in an image, or the average plant height, or other characteristic. The image analysis may entail including information about multiple (e.g., plant height and leaf width) plant characteristics in the ultimate model.

One suitable image analysis is known as spiral modeling, in which the user extracts information from an image that relates to image characteristics (e.g., leaf size) as well as periodicity (e.g., leaf spacing). In one application of spiral modeling, the user may take an image of a plant, locate the center of the image, and move away from the center one pixel at a time. As a function of the distance and angle of a given pixel from the center of the image, the user obtains intensity and background intensity values. By examining the periodicity of the image, the user may determine, for example, width and the frequency of leaves. From this periodicity information, the user can determine average leaf width. Such techniques are described in, *e.g.,* Eleventh International Conference On Chemometrics For Analytical Chemistry, Montpellier, France, June 30th- July 4th, 2008, and "Angle measure technique (AMT) for image texture characterization - 10 years conceptual development history", Kim H. Esbensen.

By incorporating image information into the inventive models, the user may then account for three orders of information, namely (1) architectural information (e.g, leaf roll) extracted from an image; (2) spectral data from a part (e.g., a leaf) of a plant; and (3) spectral data taken from a whole plant.

The model may be tested or validated - though such validation is not always necessary to the performance of the claimed methods. Any validation method can be used. Such validation may be performed, e.g., by constructing the model based on a first set of data. For example, the user may then replace certain of the first data set with other data (e.g., data taken from plants having a different genotype than plants in the first set) and re-run the model to the augmented data set to assess the model's accuracy. In this way, the user may validate the model by bootstrapping or otherwise cross-validating the model based on data from outside the data set used originally to construct the model.

The user suitably applies the model to a second set of spectroscopic data from a second plant so as to estimate the presence of the characteristic in the second plant. The methods may be used to estimate the presence of the characteristic in the second plant at the time the data was taken from the second plant.

In some examples, the methods estimate the presence of the characteristic in the second plant at a future time. In these examples, the model may be constructed based on calibration data from plants of different ages such that the final model accounts for plant age.

The methods may be used to estimate (or predict) the presence of a characteristic in a single plant or in a population of plants.

Spectroscopic data (i.e., spectra from plants used to develop the inverse model or spectra from plants that are then processed by the model) used in the methods or devices may, as described elsewhere herein, include spectra from one or more wavelengths from the visible light spectrum, from the infrared spectrum, the near-infrared spectrum, the ultraviolet spectrum, the deep-ultraviolet spectrum, or any combination thereof. For example, the spectroscopic data may include spectra of plants where all the spectra are taken at a wavelength of about 300 nm. In another example, the data may include spectra taken at wavelengths of from about 200 nm up to about 800 nm.

The spectra used in the model may be from every wavelength along a range (e.g., at every wavelength from 200 nm up to about 800 nm), or may be at intervals (e.g., at every other wavelength from 200 nm up to about 800 nm, or even at every fifth wavelength from about 200 nm up to about 800 nm).

The spectra may be taken from predetermined ranges, such as ranges set by the user. As one example, the user may elect to take spectroscopic data at wavelengths of from about 200 nm to about 2000 nm, or from about 300 nm to about 1800 nm, or even from about 400 nm to about 1000 nm. Data from about 200 nm to about 800 nm are considered especially suitable. The user may collect such data using a device that sweeps through a range of frequencies, or that collects data at multiple frequencies. The spectra may be taken from ranges that are set at the time of collection, or even from random ranges. The spectroscopic data may also include hyperspectral data.

As is described in detail elsewhere herein, the models may be constructed in a variety of ways. Suitable construction methods include partial least squares regression analysis, a partial least squares discriminant analysis, a principal component analysis, and the like. The model may be constructed by combinations of these techniques.

The user may , based on the results of the methods, select one or more plants from the second plant population on the basis of the estimate of the modeled characteristic. For example, the user may elect to plant additional maize plants of variety X where the inventive method estimates a favorable level of the desired characteristic for variety X. Alternatively, the user may elect to remove a plant based on the methods. For example, the user may elect to remove a plant of variety Y if the model estimates that variety Y possesses (or may possess) an unfavorable drought resistance.

Characteristics, as described elsewhere herein, encompass a wide range of physical and genetic aspects. Particularly suitable characteristics examined by the methods include agronomic traits, moisture content, chlorophyll concentration, photosynthesis activity, introgression, drought stress, drought tolerance, herbicide resistance, response to a chemical, yield, stress tolerance, nitrogen utilization, insect resistance, disease resistance, quantitative trait locus, a transgene, and the like. The methods and devices may also be used to investigate or estimate two or more characteristics. For example, a user may apply the claimed methods to estimate (or predict) yield and drought resistance in a plant or a plant population.

As described elsewhere herein, maize plants are suitable for use in the claimed invention, and the described "first population" may include one or more maize plants. The methods are by no means limited to any particular plant or plants, and maize plants are identified here for illustrative purposes only. Virtually any plant species can be used, including, but not limited to, monocots and dicots. Examples of plants include, but are not limited to, corn (Zea mays), Brassica spp. (e.g., B. napus, B. rapa, B. juncea), castor, palm, alfalfa (Medicago sativa), rice (Oryza sativa), rye (Secale cereale), sorghum (Sorghum bicolor, Sorghum vulgare), millet (e.g., pearl millet (Pennisetum glaucum), proso millet (Panicum miliaceum), foxtail millet (Setaria italica), finger millet (Eleusine coracana)), sunflower (Helianthus annuus), safflower (Carthamus tinctorius), wheat (Triticum aestivum), soybean (Glycine max), tobacco (Nicotiana tabacum), potato (Solanum tuberosum), peanuts (Arachis hypogaea), cotton (Gossypium barbadense, Gossypium hirsutum), sweet potato (Ipomoea batatus), cassava (Manihot esculenta), coffee (Coffea spp.), coconut (Cocos nucifera), pineapple (Ananas comosus), citrus trees (Citrus spp.), cocoa (Theobroma cacao), tea (Camellia sinensis), banana (Musa spp.), avocado (Persea americana), fig (Ficus casica), guava (Psidium guajava), mango (Mangifera indica), olive (Olea europaea), papaya (Carica papaya), cashew (Anacardium occidentale), macadamia (Macadamia integrifolia), almond (Prunus amygdalus), sugar beets (Beta vulgaris), sugarcane (Saccharum spp.), Arabidopsis thaliana, oats (Avena spp.), barley (Hordeum spp.), leguminous plants such as guar beans, locust bean, fenugreek, garden beans, cowpea, mungbean, fava bean, lentils, and chickpea, vegetables, ornamentals, grasses and conifers. Vegetables include tomatoes (Lycopersicon esculentum), lettuce (e.g., Lactuca sativa), green beans (Phaseolus vulgaris), lima beans (Phaseolus limensis), peas (Pisium spp., Lathyrus spp.), and Cucumis species such as cucumber (C. sativus), cantaloupe (C. cantalupensis), and musk melon (C. melo).

Ornamentals include azalea (Rhododendron spp.), hydrangea (Macrophylla hydrangea), hibiscus (Hibiscus rosasanensis), roses (Rosa spp.), tulips (Tulipa spp.), daffodils (Narcissus spp.), petunias (Petunia hybrida), carnation (Dianthus caryophyllus), poinsettia (Euphorbia pulcherrima), and chrysanthemum. Conifers include pines, for example, loblolly pine (Pinus taeda), slash pine (Pinus elliotii), ponderosa pine (Pinus ponderosa), lodgepole pine (Pinus contorta), and Monterey pine (Pinus radiata), Douglas fir (Pseudotsuga menziesii); Western hemlock (Tsuga canadensis), Sitka spruce (Picea glauca), redwood (Sequoia sempervirens), true firs such as silver fir (Abies amabilis) and balsam fir (Abies balsamea) and cedars such as Western red cedar (Thuja plicata) and Alaska yellow cedar (Chamaecyparis nootkatensis) .

The plant cells and/or tissue that have been transformed may be grown into plants using conventional methods (see, e.g., McCormick et al. (1986) Plant Cell Rep 5:81-84). These plants may then be grown and self-pollinated, backcrossed, and/or outcrossed, and the resulting progeny having the desired characteristic identified. Two or more generations may be grown to ensure that the characteristic is stably maintained and inherited and then seeds harvested. In this manner transformed seed having a gene switch component, a repressor, a repressible promoter, a gene switch system, a polynucleotide of interest, a recombinase, a recombination event end-product, and/or a polynucleotide encoding an SuR stably incorporated into their genome are provided. A plant and/or a seed having stably incorporated the DNA construct can be further characterized for expression, agronomics and copy number.

A first set of spectroscopic data - described above - may be obtained from one or more plants that lack (or are believed to lack) a transgenic trait. Alternatively, the data may be obtained from one or more plants possessing a transgenic trait. Such traits include - but are not limited to - insect resistance, corn rootworm resistance, herbicide resistance, drought tolerance, nitrogen utilization, stress tolerance, disease resistance, yield, and the like.

Also provided are methods of predicting drought tolerance of a plant. These methods include building a predictive model by inverse modeling of spectroscopic data collected from a first population of plants and corresponding measured drought tolerance data from the first population of plants; applying the predictive model to spectroscopic data collected from a second plant so as to estimate the drought resistance of the second plant. The methods are applicable to plant populations as well as to individual plants.

Further provided are methods of predicting the level of a target analyte in a plant. These methods include providing a set of spectral data from one or more plants corresponding to one or more reference value concentrations of an analyte of interest in the one or more plants; constructing a predictive model between the calibration spectra and the reference value concentrations wherein the predictive model is constructed using inverse modeling based on an optimal number of factors to model at least a portion of said sample spectrum; and generating a vector of calibration coefficients where said vector constitutes said predictive model and wherein a specific number of factors models at least one region of a spectrum.

Any part or parts of any of the methods disclosed herein may be carried out using a processor. Personal computers, servers, portable computing devices, and the like are all suitable for performing one or more parts of the methods.

Additionally provided are methods of estimating a plant characteristic, comprising constructing by inverse modeling a predictive model from (i) a first set of spectroscopic data from a first plant population and (ii) corresponding measured data for the characteristic in at least a portion of the first population; and applying the predictive model to a second set of spectroscopic data from a second plant to estimate the characteristic's presence in the second plant. As with the other disclosed methods, these methods may also be applied to plant populations and single plants.

Systems for estimating a plant characteristic are also provided. Such systems suitably include devices capable of collecting spectroscopic absorbance data from one or more plants physically distant from the device. These devices are known in the art. The systems also suitably include one or more memory units, which units may be removable or integral with the system. Such units are suitably capable of storing collected spectroscopic absorbance data, measured values of a plant characteristic corresponding to the spectroscopic absorbance data, or both. The systems also include one or more computing devices that are capable of correlating, by inverse modeling, at least a portion of the spectroscopic absorbance data to one or more measured values of a plant characteristic corresponding to the spectroscopic absorbance data.

The computing devices may include one or more processors. Exemplary devices include personal computers, servers, and the like.

In some examples, the device capable of collecting spectroscopic absorbance data is also capable of communicating data to the memory unit, the computing device, or both. This may be accomplished by wire link, by radio link, by cellular link, and by other communication methods known in the art. The device may transmit the data such that the system is capable of constructing and updating the model in real time. In some examples, the system constructs the model based on saved data; in others, the system does so using live, real-time data. The system may also calculate the model based on saved data, and then update or revise the model based on new or on real-time data.

Further provided are methods of predicting a level of genome introgression for a backcross experiment. These methods suitably include building a predictive model by inverse modeling principles based on chemometric analysis of spectroscopic data from at least a first plant and corresponding measured level of genome introgression data as input variables. The user may then test or validate the model. The user may then apply the model (tested or untested) to spectroscopic data (which may be remotely collected) from at least one second plant so as to estimate the level of genome introgression in that at least one second plant. The methods may, of course, be applied to plant populations as well as single plants.

The spectroscopic (e.g., remote sensing) data may include hyper-spectral imaging of reflectance from the plant. The data may also include absorbance data.

The measured data and spectroscopic or remote sensing data sets may be based on plural genotypes of a plant variety. The user may also use measured data and spectroscopic or remote sensing data set that are taken from a plant or plants that have been subject to differing or variable growing conditions, or even differing or variable growing conditions.

In this way, the user may estimate the effect that a particular growing (or environmental) condition has - or is likely to have - on a plant or plant population. For example, the user may use the model to estimate whether a new growing condition being evaluated is likely to have a positive or negative effect on yield. The estimation or prediction may be used to select for or against a plant, seed, or condition. Such selection may include at least one of (a) selection for breeding, (b) selection for genetic advancement, or (c) selection for production of commercial quantities.

Methods of predicting a level of genome introgression for a backcross experiment are provided. These methods include obtaining spectroscopic data from one or more progeny plants of a backcrossing experiment relative to a desired parental line of plants; correlating the spectroscopic data to the one or more progeny plants; analyzing the spectroscopic data to quantitatively measure one or more characteristics (e.g., phenotypic variables) of the one or more progeny plants; and assessing proximity of the progeny plant or plants to the desired parental line by reference to the quantitative measure of the one or more characteristics.

In one aspect, the present invention provides methods of predicting a plant characteristic, which, as described elsewhere herein, includes phenotype, health, physiology, genotype, introgression, and the like. Such methods suitable include building a predictive model by inverse modeling principles based on chemometric analysis of spectroscopic or remote sensing data sets and corresponding measured constituent, phenotype, health, or physiology value data sets as input variables. The user may test or otherwise validate the model, and apply the model to a spectroscopic or remote sensing data set of interest. Such data may be gathered remotely, as described elsewhere herein.

The data suitably include spectra of a plurality of wavelengths from one of more of visible (VIS), infrared (IR), near infrared (NIR), or ultraviolet (UV) light. For example, the data may include spectra at two, three, ten, or even more discrete wavelengths. The data may include multiple over predetermined ranges, e.g., spectra from 300 to 500 nm, in 1 nm or other increments. The spectra may be reflectance or absorbance; absorbance spectra are considered especially suitable. In some examples, the spectra are hyper spectral data, which are described in detail elsewhere herein and in the appended figures.

The inverse modeling is suitably effected by partial least squares regression analysis. The methods may also include one or more additional validations to improve, stabilize, or refine the model.

In some examples, the methods generate a prediction from the data set of interest. For example, the methods may be used to estimate a future level of a particular characteristic (e.g., plant height) by correlating spectra taken from a plant of interest to spectra taken fro mother plants of different ages. This prediction may be used to select (or remove) a plant for further research or commercial production.

Constituents of particular interest include leaf moisture content, chlorophyll concentration, photosynthesis activity, level of introgression in a backcross experiment, drought stress, and the like. Maize plants are considered especially suitable for the disclosed methods; other plants (soybean, wheat) are also suitable.

Also provided are apparatuses for building a prediction model for plant constituent, phenotype, health, or physiology. Such apparatuses include (a) a computer adapted to store the spectroscopic or remote sensing data; (b) a database or memory on the computer adapted to store corresponding measured constituent, phenotype, health, or physiology values; (c) an algorithm operated on the computer and adapted to build an inverse modeled prediction of constituent, phenotype, health, or physiology based on the sensed and measured stored data; and (d) an input to the computer to input a spectroscopic or remote sensed data set of interest for prediction.

Constituents of interest are described elsewhere herein, and may include leaf moisture content, chlorophyll concentration, photosynthesis activity, level of introgression in backcrossing, drought stress, and the like. The algorithm may be based on a partial least squares analysis.

The invention also provides systems for predicting plant constituent, phenotype, health, or physiology. These systems suitably include a remote sensing or spectroscopic sensor adapted to sense and/or record spectroscopic or remote sensing data; a computer adapted to read the spectroscopic or remote sensing data; a database or memory on the computer adapted to store corresponding measured constituent, phenotype, health, or physiology values; an algorithm operated on the computer and adapted to build an inverse modeled prediction of constituent, phenotype, health, or physiology by the sensed and measured data; and an input to the computer to input a spectroscopic or remote sensed data set of interest for prediction.

The sensor may be configured so as to transmit spectroscopic data to a receiver or recorder. The sensor may be fixed in position or may be mobile.

Also provided are methods of predicting chlorophyll concentration of a plant. These methods suitably include building a predictive model by inverse modeling principles based on chemometric analysis of spectroscopic or remote sensing data sets and corresponding measured chlorophyll concentration data sets as input variables; optionally testing or validating the model; and applying the model to a spectroscopic or remote sensing data set of interest.

The data set may be spectral imaging of reflectance from the plant or plants, or may be absorbance data from the subjects. The imaging may be at least one of data taken at (a) discrete wavelength(s), (b) multi-spectral data, or (c) hyper spectral data. The measured chlorophyll concentration data and spectroscopic or remote sensing data sets may be based on one or on plural genotypes of a plant.

In some examples, the measured chlorophyll concentration data and spectroscopic or remote sensing data sets are based on differing growing conditions for a plant. In some examples, the measured chlorophyll concentration data and spectroscopic or remote sensing data sets are based on differing environmental conditions for a plant.

Additionally provided are methods of predicting leaf moisture content of a plant. These methods include building a predictive model by inverse modeling principles based on chemometric analysis of spectroscopic or remote sensing data sets and corresponding measured leaf moisture content data sets as input variables. The user may optionally test or otherwise validate the model; and apply the model to a spectroscopic or remote sensing data set of interest.

Spectroscopic or remote sensing data comprises near infrared and visible light hyper-spectral imaging of reflectance from the plant. The data may also include near-IR and UV data, and may include absorbance data as well. The measured leaf moisture content data and spectroscopic or remote sensing data sets may be based on plural genotypes of a plant, on differing growing conditions for a plant, or even on differing environmental conditions for a plant.

Methods of level of genome introgression for a backcross experiment are also provided. These methods suitably include building a predictive model by inverse modeling principles based on chemometric analysis of spectroscopic or remote sensing data sets and corresponding measured level of genome introgression data sets as input variables - the user may test or validate the model. The user suitably applies the model to a spectroscopic or remote sensing data set of interest. As described elsewhere herein, the spectroscopic or remote sensing data may include hyper-spectral imaging of reflectance or absorbance data from a plant or plants. The data may be based upon plural genotypes of a plant, differing growing conditions for a plant, or even on differing environmental conditions for a plant.

The predictions generated by the methods may be used for selection of a plant or its seed. The selection may suitably include at least one of (a) selection for breeding, (b) selection for genetic advancement, or (c) selection for production of commercial quantities.

Further provided are methods of predicting a level of genome introgression for a backcross experiment. These methods include obtaining spectroscopic data related to one or more progeny plants of a backcrossing experiment relative to a desired parental line of plants; correlating the spectroscopic data to the one or more progeny plants; analyzing the spectroscopic data to quantitatively measure one or more phenotypic variables of the one or more progeny plants; assessing proximity of the progeny plant or plants to the desired parental line by reference to the quantitative measure of the one or more phenotypic variables.

In some examples, the methods include correlating the spectra of the progeny plants to one or more spectra that themselves correspond to measured - or estimated - values for one or more plant characteristics. In such methods, the user constructs an inverse model (described in more detail elsewhere herein) to relate spectral information and the level of or presence of a characteristic and uses that model to estimate or predict the level or presence of that characteristic in the progeny plants. The data may include multi-or hyper-spectral data that is obtained by remote sensing. Chemometric analysis may be used to construct a predictive model by inverse modeling principles, and the methods may include selection or non-selection of a progeny plant or plants for further use.

The present invention also provides methods of predicting photosynthesis activity of a plant. These methods include constructing a predictive model by inverse modeling principles based on chemometric analysis of spectroscopic or remote sensing data sets and corresponding measured photosynthesis activity data sets as input variables. The user may test or validate the model; the model is suitably applied to spectroscopic (e.g., remotely sensed) data of interest.

Also provided are methods of predicting the drought tolerance of a plant. These methods entail building a predictive model by inverse modeling principles based on chemometric analysis of spectroscopic or remote sensing data sets and corresponding measured drought tolerance data sets as input variables. The user may test or validate the model, as described elsewhere herein.

Further provided are methods of developing calibration for predicting a concentration of a target analyte in sample spectra. Such methods suitably entail the use of factor-based multivariate techniques. In some examples, the methods include providing a matrix of calibration spectra and associated reference values of an analyte concentration of interest; modeling a prediction function at least on the calibration spectra and associated reference values based on an optimal number of factors required to model at least a portion of said sample spectrum; and generating a vector of calibration coefficient where the vector constitutes the calibration. A number of specific number of factors then models at least one region of a spectrum.

Also provided are methods to predict concentration of a target analyte from a test data set based on a multivariate calibration. These methods suitably include providing a calibration data set, comprising a matrix of sample spectra and associated reference values of the concentration of target analyte; generating a calibration by modeling the calibration data set according to an iterative, combinative algorithm, where a specific number of factors models at least one region of a spectrum independent of possible factors; and applying said calibration to a test data set so that a prediction of a target analyte concentration is produced.

### A. Non-limiting Embodiments

To provide additional understanding of the invention, several non-limiting examples are described in detail. Reference will be made to the appended drawings. Reference numerals are used to indicate parts or locations in the drawings. These same reference numerals will indicate the same parts or locations throughout the drawings unless otherwise indicated.

Some examples of constituents are plant chlorophyll, and leaf moisture content. Some examples of characteristics are level of introgression in cross-breeding, photosynthesis activity, variety determination, transgene modification and drought stress resistance. These examples are discussed in more detail elsewhere herein.

### B. General Method and System of Predicting a Constituent or Characteristic of Maize Plants from Indirect, Remote Sensed Images of Sample Plants by Inverse Modeling

### 1. Overview of Exemplary General System and Method

The method includes (1) selecting several discrete or multi-spectral, or hyper spectral regions of the electromagnetic spectrum, (2) obtaining a digital image of an object of interest, (3) selecting and measuring the intensity of radiation at one or more wave lengths in the discrete, multi-spectral or hyper spectral regions (4) directly measuring the analyte or characteristic of interest, and (5) modeling those measurements to obtain a value indicative of an analyte or characteristic of interest in the object. The model can be used as a predictor.

Spectral information obtained from this method is subjected to at least one mathematical transformation to arrive at an analyte concentration or characteristic prediction value. Examples of such transformations are partial least squares (PLS) analysis. See, e.g., Martens and Naes 1989. The mathematical transformation can instruct a model that is used for analyte concentration or characteristic predictions of unknown objects. The model can be constructed by a training set of spectral images and directly and independently derived analyte concentration or characteristic measurements from the training objects or samples. Using techniques including, but not limited to, cross validation and outlier detection, the model can be adjusted, if needed, into a more robust form.

A computerized system 90 (see Figure 3) produces a prediction of a constituent or characteristic of interest of a maize plant or set of maize plants, from multi-or hyper-spectral data acquired by remote sensed spectroscopic imaging of the plant or plants. The acquisition of the images can be done relatively efficiently for multiple plants or sets of plants. The imaging for different plants or sets of plants can be spatially or temporally close or far. The prediction can be almost in nearly real-time after imaging acquisition, or can be at a later, convenient time, if desired.

### (a) Input Variables (X and Y training or calibration data)

The two input variable data sets 43 (independent variables X) and 44 (dependent variables Y) are each input to inverse modeling algorithm 42. The X variables are a training data set 43 comprising spectral data (whether multi- or hyper-spectra data) obtained by remote sensing. The Y variables are a data set 44 of independent, direct measurements of the characteristic of interest (e.g., constituent such as leaf chlorophyll content) associated with at least a substantial number of the same plants or plots imaged by remote sensing to obtain data set 43. Methods to obtain both the remote sensed data set X and the direct actual measurements Y are well-known in the art or within the skill of those skilled in the art.

**(b) X data**

An example of remote sensing data is a remote sensed image of the plant or plants, which can be converted by well-known methods into a spectrogram. The spectrogram can be sampled at a number of wavelengths to provide a matrix of values correlated to wavelength. This matrix is thus available to be input into model building algorithm 42.

Remote sensing is used to collect digital images of a plurality of plants having a good range of variation relative to the analyte or characteristic of interest as a training set. It is desirable to have a reasonable spread in reference measurements and quality spectral data. The images can be of plant canopies by remote sensing. If sufficient resolution is available, data can be extracted plant-by-plant. Alternatively, remote sensing may be used to obtain images on a plant-by-plant basis. Images can be obtained at a rate of a mere several seconds per sample. The method can use calibration set images from just a few samples or from millions (or more) samples.

In these described examples, suitable data includes multi-spectral or hyper spectral covering at least near infrared and visible range; ultraviolet range may also be included. The independent X variables can be spectral data from the IR, NIR, VIS, and/or UV regions of the spectrum. Example models were built from 520 wavelengths from 400 to 1000 nm. Other models are built from 13 wavelengths. The invention is not limited to any particular wavelength or number of wavelengths..

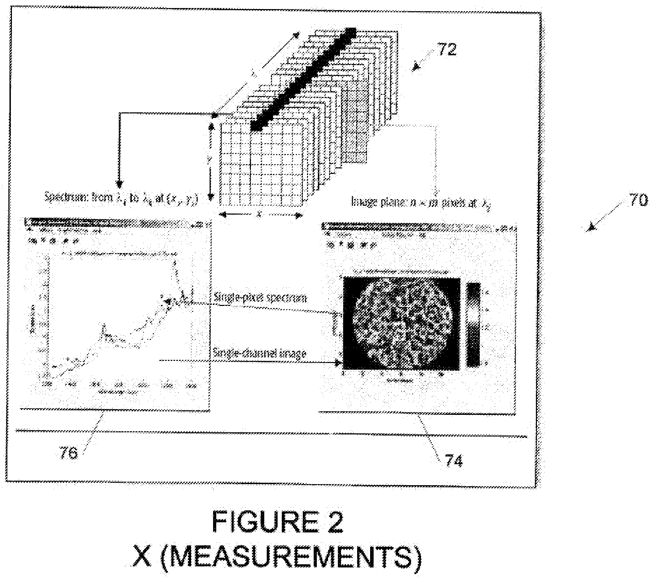

Each digital image may be processed to produce absorption spectra over the selected range. More specifically, an image is processed to extract the spectra for each wavelength across the range for each image plane of the digital image, as is illustrated in Figure 2 by methods well known in the art.

**(c) Y data**

Direct measurement of the characteristic or analyte of interest is obtained and associated with the digital image of each object of interest (each sample). An example of actual phenotype measurements is leaf chlorophyll concentration for maize plants. At any time after emergence, leaf chlorophyll concentration of the plants can be measured by any of a number of well-known methods. An example is described in US 7,112,806. This information can likewise be put into a database table or matrix, which in turn can be input into a software-based model building algorithm 42. In addition to continuous variables, discrete characteristics also be predicted. Drought stress and trangenes are perturbations to maize that can be predicted as characteristics.

**(d) Calibration Methods**

Martens and Naes 1989, Chapter 3 describe various methods of calibration. Selection of principal components and properties of PCR in prediction are described in detail at Section 3.4.6. PLSR is discussed in detail thereafter. PLSR compresses X to its most relevant factors, and can be used for one variable Y, or for multiple variables Y.

Martens and Naes 1989 Chapters 4 and 5 discuss design of the modeling approach, including data selection, mathematical transfer function, and pre- and post- treatment steps. A variety of possible multivariate calibration approaches are discussed. Martens and Naes 1989, Chapter 6, entitled "Data selection and experimental design" discuss some of the considerations in choosing. They include: (a) defining the target population of a calibration, Section 6.1.3; (b) preliminary assessment of problem complexity, section 6.1.4; (c) choosing variables to be measured, section 6.2; (d) reference Y variables; (e) instrument X variables; (f) experimental design for calibration, (g) basic principles, section 6.3.1, (g) choosing the calibration set from available objects, section 6.4. One skilled in the art may use this material as a starting point for selecting a design. Martens and Naes 1989, Chapter 7 is entitled "Pretreatment and linearization". This chapter discusses such things as: (a) weighting of variables, (b) linearity problems, and (c) smoothing. Martens and Naes 1989, Chapter 8 is entitled "Multivariate calibration illustrated: quantifying litmus in dirty samples". It provides a description of a specific experimental design, including (a) problem formation, design and measurements, (b) exploration data analysis and data pre treatments, (c) calibration, (d) specialized calibrations, (e) prediction, outlier detection and classification.

There are a variety of alternative techniques for multivariate regression models. A main feature is that such models handle multivariate, non-selective measurements and enable utilization of all or most measured information rather than having to resort to pre-selecting a few discrete measurement-channels.

Another benefit of such multivariate analysis is the calibration model does not only provide numerical predictions of the sought property, a number of informative parameters plus the residuals are obtained. They can be used in an exploratory fashion to investigate the model's validity, improve the model, understand why the model does not work, or see where a sample differs from other samples. Other exploratory uses are possible.

The loadings, for example, can show of some measured variables do not behave as expected. The scores can provide expected as well as unexpected information about the samples. For example, an extreme score value indicates an extreme sample or possibly an outlier. The visualization of principal components allows a way of understanding the model.

With regard to outliers, a multivariate analysis can be beneficial. Errors are the rule rather than the exception due, for example, to trivial errors, instrument errors, and sampling errors. If significantly large in quantity or quality, these errors can destroy meaningful results or interpretation. The detection of outliers is greatly enhanced by multivariate data.

An advantage of PCA, for example, is that there are ways to either identify residuals (*i.e.,* parts of a spectral profile that cannot be described by the loadings) as either measurement noise or possibly unmodeled variation. Once detected, a variety of ways including robust statistical analysis can be used to make decisions whether the residuals represent relevant model information or not and how they should be handled.

Multivariate models can handle situations where univariate models cannot. For example, it is possible to incorporate interferents and to have automatic outlier detection when building or using a model. Multivariate models and data make it possible to supplement traditional deductive approaches with an exploratory one.

Rather than using experiments to simply verify hypotheses, new ideas, knowledge and hypotheses may come from measured data directly by properly visualizing measurements that are descriptive for a particular problem. This can save both time and money.

### (e) PCA

A PCA method can be used to reduce the dimensionality of a large number of interrelated variables (absorption intensities at different wavelengths) while retaining information that distinguishes one component from another. As is well known, the data reduction is a result of using an eigenvector transformation of an original set of interrelated variables (e.g., the absorption spectrum) into a substantially smaller set of orthogonal principal component (PC) variables that represents most of the information in the original set. The new set of variables is ordered such that the first few retain most of the variation present in the original set. The principal component vectors can be transformed by orthogonal rotation against an average value for the absorbance to obtain both a known wavelength and the relative value of the absorbance at that wavelength that is attributable to the analyte (*i.e.,* vectors versus scores).

By performing this analysis on information obtained from the selected spectral range, cross correlating the principal component vectors via a linear algorithm, and using sometimes other methods to remove noise, score values are obtained which can be used in a system algorithm or model to determine the concentration of the constituent or characteristic of interest.

In PCA, the principal component (also more generally called a latent variable) describes the main variation in the total, sometimes complex data of the prediction set. The loading vector is a new basis element for representing the data. The scores weight the amount of this loading vector in each of the spectra. The loadings and scores are found from the measured profiles alone and in a least squares sense.

Another part of the principal component model is known as "residuals," which are the part of the spectra that are not included in the variation of the new basis. Typically, residuals are measurement noise. PCA can result in just one component. If there is more than one type of phenomenon in the measured spectra, more components can be determined in an equivalent way. In general, PCA replaces the many variables (the individual wavelengths of multi-spectral or hyper spectral spectrum range) with new variables.

PCA calibration models can be used to check for interference, outliers, or clustering and grouping of samples. If the variation of interest is strong, such as drought, the effect may be evident in the separation of the scores representing the major variation in the data. The PCA scores from the model can warn a user of some potential erroneous data (e.g., the sample is wrong or the sensors are malfunctioning). Scores can also point to interferences in the spectra. Thus, it is useful to employ a statistically significant number of prediction sets that have a good range in variation.

Predictions can also be made from a regression of the scores against the traits of interest. Calibration models based on scores is called a principal component regression model. To predict concentration of an analyte or characteristic of interest in a new sample, a mixture profile of samples is measured. From the already known loading vectors found during the calibration stage, the score values of the new sample can be calculated and these scores are inserted in the regression model. This yields a prediction of the analyte concentration or characteristic.

### (f) PLS

PLS (partial least squares) is another example of a calibration method. The objective of PLS is to define a set of latent variables through the projection of the process and quality spaces onto new orthogonal subspaces by maximizing the covariance between the two spaces. In spectrographic modeling process, the components of the matrix of spectral characteristics are extracted so as to maximize the covariance with the measured absorbance in the set of calibration samples. The relationships are developed from the training set and then applied to the set of unknowns. PLS works well not only for analyzing the concentrations of specific chemicals, but also for analyzing sample properties or characteristics which produce a spectral response.

PLS regression generalizes and combines features from principal component analysis and multiple regression. One use is prediction of a set of dependent variables from a typically very large set of independent variables (i.e., predictors). PLS can be a powerful analysis method because of its minimal demands on measurement scales, sample size, and residual distributions. PLS can be used for theory confirmation but also to discover relationships that may or may not be known and also to suggest propositions for later testing.

PLS avoids two problems, namely inadmissible solutions and factor indeterminacy. It is assumed that all measured variance is useful variance to be explained. The approach estimates the latent variables as exact linear combinations of the observed measures.

PLS therefore avoids the indeterminacy problem and provides an exact definition of component scores. Using iterative estimation techniques, PLS provides a general model which encompasses a number of transformation techniques. Because the iterative algorithm generally consists of a series of ordinary least squares analysis, identification is not a problem for recursive models, nor does it presume any distributional form for measured variables.

PLS is well suited to explaining complex relationships. In spectroscopy PLS the X variables are spectra and Y variables are constituents. The X data are projected onto a small number of underlying latent variables called PLS components. The Y data are actively used in estimating the latent variables to ensure that the first components are those that are most relevant for predicting the Y variables. Interpretation of the relationship between X data and Y data is then simplified as the relationship is concentrated on the smallest number of components.

Plotting first PLS components allows viewing of main associations between X and Y variables and also interrelationships with X and Y data. PLS software also allows classification to reliably assign new samples to existing classes in a given population. This type of analysis is known as PLS discriminant analysis (PLS-DA). Sometimes it is desirable to have continuous prediction regarding level of a constituent in the plant (e.g., moisture or chlorophyll). At other times, Boolean relationships are desirable (e.g., into which class, 0 or 1, does a plant fall, such as between drought stressed and non-stressed; it is a non-continuum). PLS-DA can be used for this.

**(g) Model Testing and Validation**

Part of the development of model 45 is successful processing of a training or test set 46 of spectral data. Once model 45 is created, the training set 46 is input into model 45 and a prediction 50 is output from model 45. Prediction 50 is checked against the independent, direct, reference measurement corresponding to the training set 46 (see step 46 of Figure 7). If the comparison is within an acceptable margin of error, validation of model 45 can be presumed and the prediction 50 used. However, if prediction 50 is outside of the margin of error, model 45 can be revised or checked. This can be done in an iterative fashion until prediction 50 is within an acceptable margin of error and considered validated.

As can be appreciated, the validation process can take many forms. In one example a statistical analysis can be done between the prediction based on a validation set and on corresponding reference measurements. One such analysis is cross-validation with a quantification of coefficient of determination or sum of squares ($R^2$), such as is well known.

Martens and Naes 1989, Chapter 4, entitled "ASSESSEMENT, VALIDATION and CHOICE OF CALIBRATION METHOD", discusses a variety of methods. Examples are: (a) validation assessment of MSE; (b) external, (c) internal, and (d) cross validation, section 4.3.2.2. Model selection and checking are discussed, see in particular, section 4.5 and section 4.6. Outlier detection, classification of results, and recalibration are discussed in Chapter 5. The chapter includes a description of methods for deciding whether any should be included in the model formation, or whether they should be included in the prediction model.

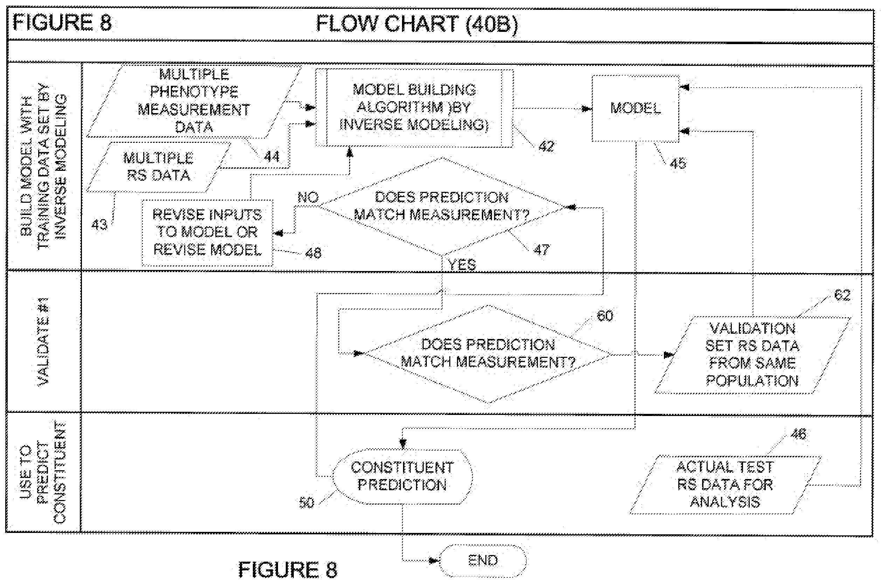

Figure 8 illustrates one validation option. Additional validation steps 60/62 can be used. In this example, RS data 62 from the same population of plants as the RS training set data is input into model 45. Using validation data 62 as an input, another prediction 50 is generated with this different input data (but from the same population of plants). If the prediction 50 generated from validation data 62 is within an acceptable margin of error, model 45 is validated and is ready for RS test data 72.

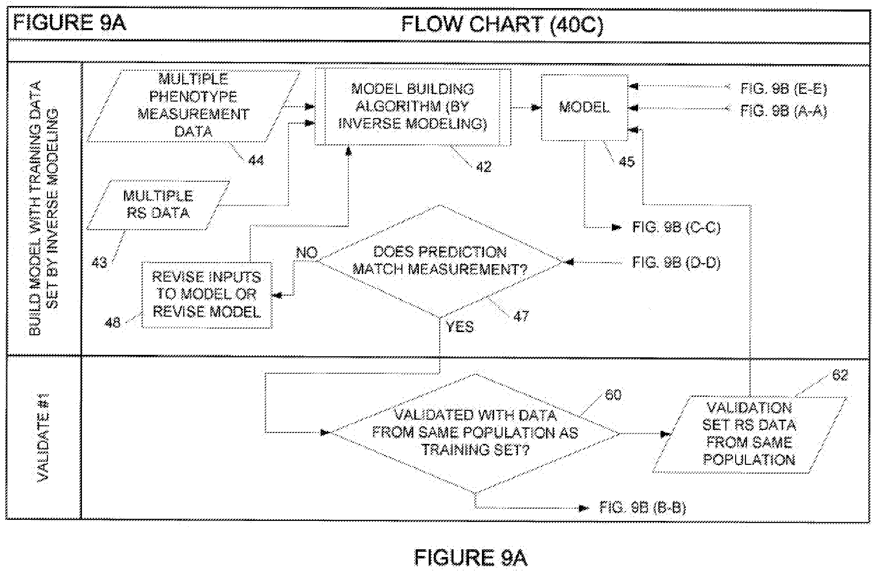

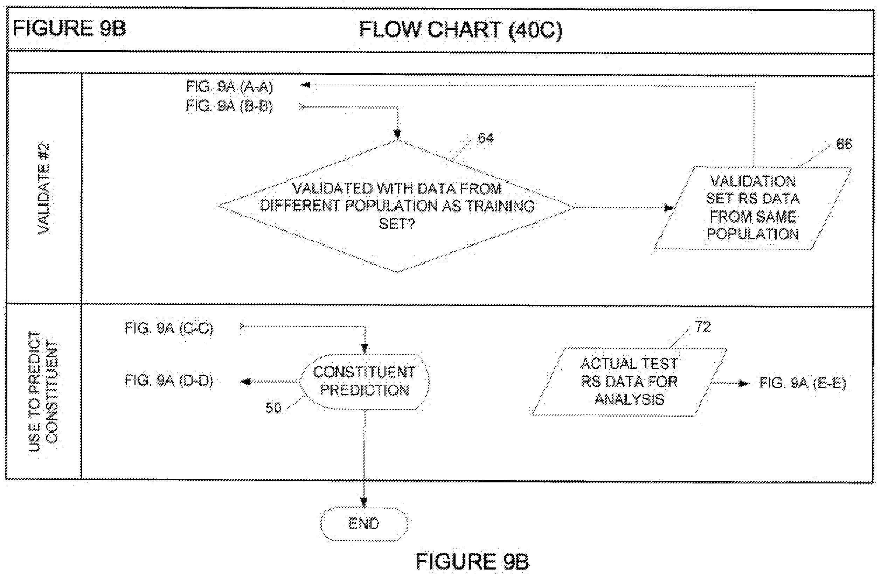

Figures 9A and B illustrate a second additional validation can be used. Here the training RS data set from a population of plants is used to create model 45. Then, as discussed with regard to Figure 8, a first validation set of RS data 62 taken from the same population of plants as training set 46 is used as the input to model 45 for a another round of validation. Figures 9A and B illustrate that a second validation set of RS validation data 66, here from a different population relative to training set 46 (and to first validation set 62) can be used as the input to model 45.

As shown at steps 60 and 64, only if both validation steps are within acceptable margin of error is model 45 validated as ready to operate on actual data 72 for prediction. If not, model 45 can be revised until validated (see step 48).

The calibration model 45 was developed and evaluated using full cross validation (Martens and Naes, 1989). The optimum number of latent variable/terms in the PLS calibration model were determined by cross validation. The resulting calibration equations between the chemical analysis Y-data and the VIS and NIR X-data were evaluated based on the coefficient of determination in calibration ($R^2$) and the root means square of the standard error in cross validation (RMSECV).

Scatter plots of the reference and estimated values of the physicochemical properties or constituent of interest indicate accuracy of the model. They can also allow classification into qualitative groups. The identified software allows the user to select different plots, visualizations, and classification techniques.

## 2. Comparison to Classical Approach

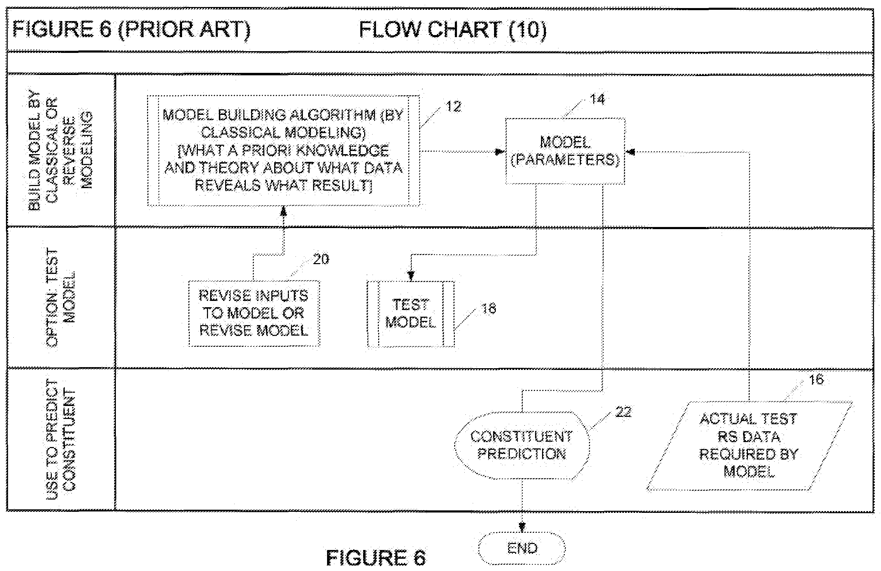

A generalized method for predicting a constituent or characteristic of a plant from a model created by inverse modeling techniques, according to one aspect of the present invention, is further understood by comparison to the prior art reverse or classical method of Figure 6.

The prior art approach (illustrated in flow chart 10 of Figure 6) builds a model 14 for predicting a constituent from remote sensing data by a classical or reverse modeling algorithm 12. Algorithm 12 is based on *a priori* knowledge and scientific methods which attempt to hypothesize the principal factors which influence the constituent. Actual data for prediction 16 is then introduced to model 14. Model 20 can be tested (step 20).

If the testing validates model 14 (according to any of a number of conventional validation methods), the prediction 30 is used. On the other hand, if testing 20 does not validate model 14, the designer can revise the model 14 or algorithm 12. This approach is well-known in the art. Such classical, causal-based approaches have certain deficiencies that are not adequately addressed in the state of the art of plant breeding, advancement, and commercial production. For example, one risks having an incomplete understanding of what affects the constituent (or related characteristics) and how to weight it/them accordingly.

One example of application of the conventional method of Figure 6 applied to predicting a constituent in maize plants is as follows. A reverse model is developed based on assumptions such as sensed reflectance of a discrete wavelength of visible, IR, or UV energy from the plant. Remotely sensed digital images of a set of experimental plots of different genotype maize plants (e.g., six different hybrids in six plots A1-C3 at a growing location 1 as diagrammatically illustrated in Figure 1) are obtained by an appropriate remote sensing sensor filtered for the discrete wavelength.

The model 12 is built to take values related to the measured discrete wavelength for each plot and plug them into a pre-determined mathematic formula as the variable to generate a solution for each plot, which is a predicted constituent content 30 for each value of discrete wavelength pre-determined to be related to constituent content of a maize plant. As can be appreciated, this method 10 filters the spectrum to only the discrete wavelength. In this sense, it greatly reduces the amount of spectral data to analyze. But it is locked into, depends on, and is constrained by the prior assumption that only that wavelength informs an accurate prediction of the constituent.

Accordingly, the general inverse method is a different approach from classical or reverse modeling approaches, with both prominent and subtle benefits, some of which are inter-related. Use of multivariate analysis provides a tool to derive useful information from what can be a large amount of data. The analysis not only allows building of a calibration model but prediction from that model with validation against prevents too cautious under-fitting and ambitious over-fitting. It can identify extreme outlier or errors in the data to allow such data to be dealt with.

The calibration model may be optimized through testing and validation, as well as pretreatment and linearization techniques. Multivariate analysis provides reliable prediction of needed information at the right time for acceptable cost from indirect observation measurements even despite selectivity problems, interference, and mistakes.

## 3. Details Regarding an Exemplary Inverse Approach

### (a) Hardware

Figure 3 illustrates a non-limiting example of a hardware system upon which any of the methods of Figures 7-9 are suitably practiced. A computer processor 92 is operably connected with a terminal 94 (keyboard and display) via Ethernet 98. Processor is operably in communication with a RS database db1 (X-block data) and a measured constituent database db2 (Y-block data). A printer 96 (or other peripheral device such as a modem, wireless hub, internet connection, etc.) allows printing or communication of the results of a software program operable with processor 92 which practices the prediction model 45. A computer monitor allows display of information to the user.

Of course, a variety of hardware and software configurations and implementations are possible. In Figure 3 a mainframe computer is indicated for processor 92 because inverse modeling algorithm using PLS can be very computation intensive. Standard PCs can be configured with enough computational power to accommodate method 40.

### (b) Software

A variety of commercially available software packages are available to implement the inverse modeling method 40. One such commercial software application uses the Matlab (e.g., Ver. 7.4.0, Mathworks, Inc., Natick, MA USA) technical computing environment. The PLS Toolbox (Eigenvector Research, Wenatchee, WA USA) has a number of tools for building, validating and implementing models for trait and class predictions. Unscrambler® (Camo Software AS, Oslo, NORWAY) is another platform that has been used. Both can perform PCA, PLS, PLS-R, PCR, and other multivariate calibrations per Martens and Naes 1989. Martens and Naes 1989 describes various pretreatments of data useful in model building. The identified software allows a variety of pretreatments. Normalization or signal standardization as well as mathematical treatments such as smoothing or derivatives are available in the software packages for pretreatment of the data. Theory and implementation is described in Martens and Naes 1989, which describes various pretreatments of data that may be used in the model building. These and others are typically available in the commercial software.

The software packages provide a variety of functions for the user. They include plotting, analysis aids and input/output functions. Others are data editing, scaling, and preprocessing. A variety of statistical analysis and experimental design options are available. Examples include but are not limited to (a) data exploration and pattern recognition (e.g., PCA, Parallel Factor Analysis, MCR, etc.); (b) classification (e.g., SIMCA, k-nearest neighbors, PLS Discriminant Analysis, Cluster Analysis, etc.), (c) linear and non-linear regression (e.g., PLS, PCR, etc.), and (d) self-modeling curve resolution, pure variable methods (e.g., CODA_DW, Purity (compare to SIMPLSMA), etc.), and others.

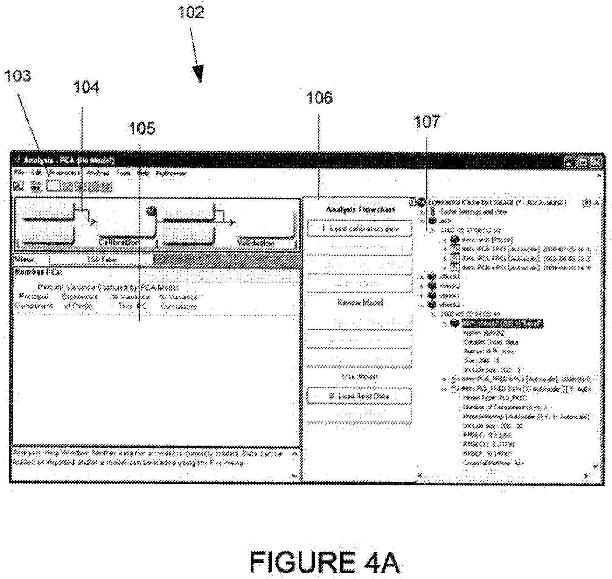

In Figure 4A, for example, the user is provided by the PLS Toolbox software on display 102 a conventional toolbar 103 from which options can be selected (see, e.g., Figure 4A). Status Pane 104 provides a schematic of the type of model selected. An SSQ Table area 105 displays statistics as well as allows changes to, for example, the number of factors or components being modeled. Flowchart Controls 106 provide an outline of the steps needed for a selected data analysis model. Model Cache 107 tracks and displays the model, data, and predictions (in text and/or plots and/or diagrams).

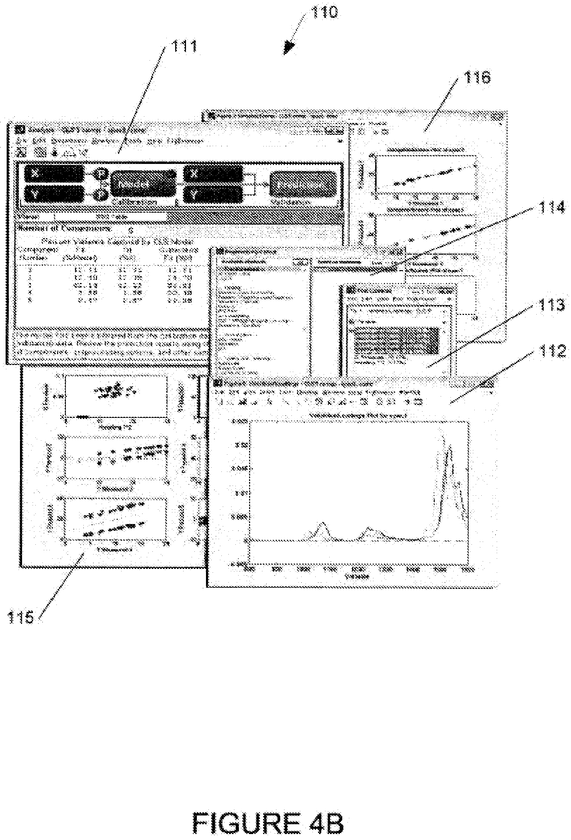

Figure 4B illustrates examples of some of these types of GUIs (110) when an initial model is being or has been built. The software generates visual displays that can be viewed by the user during the processes, and which can assist the user in understanding the model and its predictions. Variables and loadings 112 can be displayed for visualization by the user.

Plot controls 113 allow the user to select the type of plot. Preprocessing options 114 exist for the user. Scores 116 and model diagrams and results can be displayed. Cross-correlation plots of predicted values to measured values can be viewed, and compared as the model is being built, optionally tested and validated, and used. The GUIs can also assist the user in designing, stabilizing, and changing the model.

Figure 5 illustrates similar GUIs for a different software (Camo Unscrambler™). Original training set spectra 102 can be displayed and visualized. Regression coefficients 124 and scores 126 can likewise. A cross-correlation plot of predicted versus measured values, with numerical statistical analysis results 128, can show the user how accurate the model is performing. In the hypothetical example of Figure 5, the cross-correlation plot indicates the model is performing well, as the data points align along the equivalence line.

**Books and articles**

- Bro, R., Multivariate calibration -- What is in chemometrics for the analytical chemist?, Analytica Chimica Acta 500 (2003) 185-194 (compares univariate with multivariate calibration; discusses "noise reduction", latent variables, loadings and scores, selectivity; discusses outlier detection and handling)
- Haaland, D. and Thomas, E., Partial Least-Squares Methods for Spectral Analyses. 1. Relation to Other Quantitative Calibration Methods and the Extraction of Qualitative Information 2. Application to Simulated and Glass Spectral Data, Anal. Chem. 1998, 60, 1202-1208 (background of PLS and comparison to other calibration methods; discusses selection of optimal number of factors of a PLS model by cross-validation, etc.; discusses qualitative information can be obtained)
- Slaughter, D., Barret, D. and Boersig, M., Nondestructive Determination of Soluble Solids in Tomatoes using Near infrared Spectroscopy, vol. 61, no. 4 1996 Journal of Food Science 695-697 (example of spectral data and measured data modeled with PLS per Martens and Naes 1989 using NSAS software package (version 3.18) ("correct number of regression factors for the PLS model was determined by the minimum mean square error of cross validation (per Martens and Naes 1989)).

*Patents*

- US435309 Thomas et al. Systematic Wavelength Selection for Improved Multivariate Spectral Analysis (provides background on MVC and PCA and PLS)
- US4944589 Nordquist Method of Reducing the Susceptibility to Interference of a
- US5252829 Nygaard et al. Method of Determining Urea in Milk, (provides examples of Martens and Naes 1989 PLS with spectra and cross validation)
- US6040578 Malin et al. Method and Apparatus for Multi-spectral Analysis of Organic Block Analytes in Noninvasive Infrared Spectroscopy (background and examples of modeling by MVC with prediction set and reference set.)
- US6528809 Thomas et al. Methods and Apparatus of Tailoring Spectroscopic Calibration Models (discusses tailoring of the model)
- US6845326 Panigrahi et al. Optical Sensor for analyzing a Stream of an Agricultural Product to Determine its Constituents (example of an optical sensor)
- US6876931 Lorenz et al. Automatic Process for Sample Selection During Multivariate Calibration (enhancement of MVC through optimization of a calibration data set)

■ US6871169 Hazen et al. Combinative Multivariate Calibration that Enhances Prediction Ability Through Removal of Over-modeled Regions (discusses how select factors, and data fitting)

■ WO/1996/032631 Calibration Transfer Standards and Methods (discusses selection of factors or principle components to include in the model by RMSEP, SIMCA)

WO/1999/067722 Method and Arrangement for Calibration of Input Data (discusses pretreatment methods).

### C. Specific Exemplary Method 1 -- Inverse Modeling of Chlorophyll Concentration in Maize

### 1. Constituent and Method

An inverse modeling approach like described with respect to Figures 1-5 and 6-9A/B was used to develop a model for predicting chlorophyll concentration in maize as the constituent of interest. The model was developed from multivariate calibration techniques described in Martens and Naes 1989. Figure 10A is a plot showing correlation between predicted concentrations and actual measured concentrations.

### 2. Plants

Maize inbreds/hybrids were planted and grown under normal conditions in a plurality of plots to substantial maturity (until substantial leaf development). The plots experienced a relatively wide variety of growing conditions.

These differences between plots provide a degree of variation between these different calibration samples. The number of plots and variances between plants and plots can vary according to need or design. It is normally desirable to have a substantial range of variation between calibration samples. The number of samples used for calibration is preferably as large as practically feasible. The samples suitably contain a useful variation of the contents of the constituent of interest.

### 3. Collection of Reflected Spectral Information

Spectra from the plant canopies were collected in digitized form and stored for later numerical analysis by multivariate calibration method. This X-block calibration data is spectral data from the plurality of plots. Hyper spectral data was collected by remote sensing from the reflectance of the canopy of each plot of growing maize. The data was collected on several different days or occasions, again for variation between calibration samples.

The data are collected in any of a number of ways from an elevated height over the plot. Examples include, but are not limited to, from a few meters above ground on a scaffold, to several tens of meters above the ground on a cherry picker or crane, to one-hundred or more meters via a plane, helicopter, or even a satellite, using a hyper-spectral digital imaging system or other specta-gathering devices.

The hyper-spectral reflectance data is taken from the visible (VIS) (approx. 760-380 nm) and near infrared (NIR) (approx. 1100-750 nm) regions of the electromagnetic spectrum (roughly a 1000 nm range). In one example, the data was between 100 and 1000 spectral bands (in one specific example 520 bands) of relatively narrow bandwidth (e.g., 1-10 nm) (in one specific example 1.2 nm in width). The number of bands or channels, and their width can vary according to need or design. Spectra from outside this range (e.g., additional NIR, IR, and UV) are also possible.

These reflectance readings at 1.2 nm increments collected over a visible and near infrared wavelength range for each image of each sample canopy can be each stored. Optionally, the reflectance readings for each wavelength for all sample images can be averaged into one hyper-spectral plot. Optionally, multiple (e.g., five) replicates for each sample plot are suitably performed and averaged for chemometric analysis.

Remote sensing acquisition of this data is relatively efficient. The data can be acquired for a number of plots non-invasively and non-destructively. Data can be acquired for large number of plants (or plots) simultaneously or near simultaneously. Alternatively, images of different samples can be obtained with different imaging systems and/or at different times. The data is suitably digital information that can be stored, accessed, and transferred relatively quickly and inexpensively. No pretreatment or pre-processing of samples is required.

Figure 1 illustrates diagrammatically plural plots. They can be spatially close or dispersed. Figure 2 illustrates the type of spectral and spatial information that is available from these remote sensed images. The collected images are stored by well-known methods in a database, as illustrated in Figures 2 and 5.

### 4. Direct Measurement of Chlorophyll Concentration (Y Data)

Y-block data included actual measurements of the constituent concentration of chlorophyll for at least one plant from each imaged plot. Chlorophyll concentrations of plants from plots that were imaged are measured using one of a number of well known in the art techniques. Examples of methods of direct measurement of leaf chlorophyll content are set forth below.

■ Gitelson, A., Buschmann, C., and Lichtenthaler, H., "The Chlorophyll Fluorescence Rotation F735/F700 as an Accurate Measure of the Chlorophyll Content in Plants", REMOTE SENS. ENVIRON. 69:296-302 (1999);

■ Markwell, J., Osterman, J., and Mitchell, J.; "Calibration of the Minolta SPAD-502 Leaf Chlorophyll Meter, PHOTOSYNTHESIS RESEARCH 46/3:467-472 (1995);

■ Moulin, S.; Baret, R; Brugier, N; Bataile, C., Assessing the Vertical Distribution of Leaf Chlorophyll Content in a Maize Crop, GEOSCIENCES AND REMOTE SENSING SYMPOSIUM, 2003, ABARSS apos;03. Proceedings. 2003 IEEE International Volume 5, Issue, 2003 Pages: 3284-3286 vol. 5;

■ US Patent 7,112,806, Lussier, entitled "Bio-Imaging and Information System for Scanning, Detecting, Diagnosing and Optimizing Plant Health".

## 5. Calibration Model Formation

Multivariate calibration was performed on the basis of maize plants/plots calibration samples (X-block data) containing known concentrations of leaf chlorophyll content (Y-block data). Validation by a cross correlation plot using constituent concentrations derived from spectral data formed the inverse model (a calibration curve)

The PLS Toolbox/Matlab™ software described earlier was used on computer system 90. Partial least squares regression (PLS-R) of the measured (Y-block) chlorophyll concentration associated with the acquired (X-block) selected IR spectra was performed for chlorophyll concentration prediction modeling. Spectra sets were ranked by their PLS chlorophyll concentration prediction error. The number of latent variables in the PLS regression was determined automatically by the software. IR spectra selected from this algorithm predicted chlorophyll concentration with the least root mean square error in leave one out cross validation, and a regression model was built with the spectra. As indicated in Figure 10A, the PLS regression model selected three latent variables.

The method creates a synthetic spectrum that accounts for the largest part of the variance within the spectral set that produces the first loading vector or principal component (PC). The scaling factor that represents the amount of the loading vector in each of the spectra in the data set is the score. Multiplying the loading vector by the score for each spectra and subtracting this from the original spectra produces a new spectral set. This in turn allows investigation of the spectra for relevant patterns in the set of sample analyses.

Figures 4A/B and 5 illustrate non-limiting examples of visual displays that are possible with such software. It includes not only the cross-correlation plots, but also score plots (e.g., of principal components). Loading vectors can also be shown. In practice, these visualizations can supplement the analysis of the software and allow the user to evaluate and recognize additional information that can be important to understanding the model and/or changing the model.

For example, the types of displays of Figures 4A/B and 5 can provide useful information. The user can learn from observations of this information. The ability to see how the effect of the different input variables changes with different types of data analysis can be a powerful tool in untangling convoluting factors that separate plants for a wide variety of issues, including those affecting plant health, vigor, and yield.

Figure 10B shows a display of two plots of absorption versus wavelength along the range of approximately 1100 to 400 nm range. The profile that begins on top on the left side of the plots, but changes to bottom at about 700 nm illustrates high chlorophyll content from the prediction model. The other profile indicates low chlorophyll content. This allows both visualization of the spectral profile for those two quantifications, but may be used as an analysis or classification tool relative a spectral profile from test samples. The fact that there one profile is above the other for the higher wavelengths, but is below the other for lower wavelengths can provide useful information.

## 6. Model Validation

A variety of ways to test and validate the model are available. See, e.g., Martens and Naes 1989, Chapter 4.

Cross-validation was performed on the calibration samples based on excluding one observation from the calibration model, which is leave-one-out cross-validation. Since the validation samples in cross-validation procedure are from the calibration sample set, a comparable kind of spectral variability can be expected.

External validation is also suitably performed on the prediction sample set. In this way, the ability of the calibration model to withstand unknown variability is assessed. Beside linear PLS-R, other PLSR methods (e.g., nonlinear PLSR and weighted PLSR) are available to see whether the modeling performance may be improved. The accuracy of the model was defined as correlation coefficients.

The user can decide what type and how much validation is required. Figure 10 illustrates an initial PLS regression model to predict chlorophyll concentration using the collected spectral data for the same plots, compared to the actual chlorophyll concentration measurements from the same plots resulted in the following values:

1. Coefficient of Determination in cross-validation ($R^2$) of 0.956.
2. Root mean square error of calibration (RMSEC) of 3.0432.
3. A standard error of prediction or root mean square error of cross validation (RMSECV) of 3.3802.

Figure 10A at 102 shows linear data fitting and good results. The differences between RMSEC and RMSECV *indicate* that the model was robust not only for the observations in the calibration dataset but also for external samples. Variability of the model as expressed by per cent variance captured by the regression model can be reviewed to see convergences.

The calibration and validation sets fit well to the equivalence line. Correlation coefficients ($R^2$) for calibration and validation were very high at >0.95 using only three PCs. PCA can be performed to observe clustering or demarcation. The data are clustered along two sections of the line. Samples separate out in order of solution strength. This allows the identification and classification of various levels of the constituent present.

### 7. Use of Validated Model to Predict Chlorophyll in Test Data Set of Interest

Once validated, the model 45 can be used to process remote sensed (RS) data set (of same or similar spectra) for the same type of plants, regardless of growing area, conditions, environmental factors, etc. and predict a constituent of interest such as chlorophyll content. That the model may be validated should not be taken to mean that the model must be validated, as the present invention contemplates that the user may employ a validated or non-validated model.

The model 45 can be used to predict chlorophyll based on remote sensed data of other maize plants. These unknown variables can be introduced into the model. The model will provide a prediction of chlorophyll.

The regression equation for chlorophyll consists of a set of terms comprising a regression coefficient as found by PLS-R, and corresponding absorbance value at each of the spectral points. As indicated in Figure 10A, the regression coefficients were found using 3 calibration factors. Figure 10A shows that it is possible to perform calibration for leaf chlorophyll content concentrations in the presence of other constituents which interfere with it. The method uses all X wavelengths, and can identify and address outliers. Optimum PLS components are automatically chosen, and ranked in importance, which can be used to produce what is considered the best model. The method allows for some interpretation. Observations and positive and negative correlations can be made. Y may be modeled from X.

Results show very strong correlation between the actual and predicted as shown by the regression coefficients in Figure 10A. This can allow the model to be used for such things as, for example, monitoring plants or plant populations. It can be used also for predicting other things. For example, chlorophyll content may be indicative of other things, such as phenotype, health, vitality, yield, etc. Further models can be developed to relate the single constituent (e.g., chlorophyll) to or with other things.

As can be seen, this example shows provides a rapid and relatively low cost analytical tool. It allows not only quantitative analysis, but the capability of some qualitative analyses which is less demanding and more straightforward to develop and maintain than taking direct measurements. Furthermore, it can allow rapid preliminary classification. It can be an objective tool to assist in selection in breeding. Moreover, the model is suitably used in relation with other data sets, or with other models to predict things about the plants.

### D. Specific Exemplary Method 2 -- Inverse Modeling of Leaf Moisture in Maize

#### 1. Constituent and Method

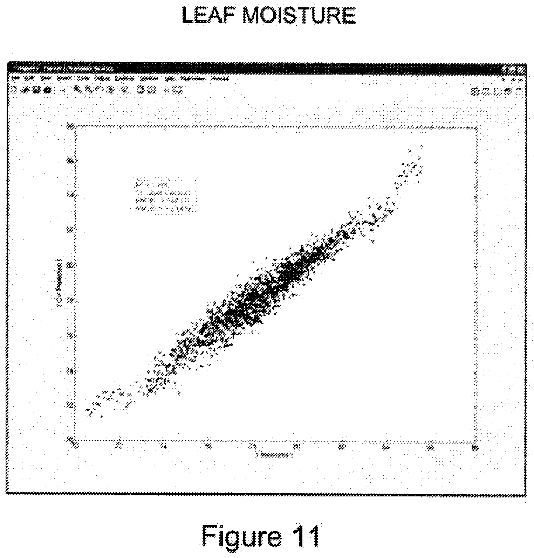

Figure 11 provides information about a second specific exemplary example, to predict, as the constituent, leaf moisture in maize.

#### 2. Plants and Growth Conditions

An inverse modeling approach like Specific Exemplary Method 1, above, was used to develop a model for predicting leaf moisture in maize. Reasonable variability between sample plants, growth conditions, and other conditions for the plants was selected.

#### 3. Collection of Reflected Spectral Information

Hyper spectral data was collected for each of the samples by remote sensing and exported into a format that useful with the commercially available multivariate calibration software.

#### 4. Direct Measurement of Leaf Moisture

Leaf moisture was measured using any of a number of conventional techniques. Leaf water content per unit leaf area can be calculated by determining the fresh weight of the leaves, the dry weight of the leaves, and the area sampled. Leaf samples were collected at day from the plants.

A predetermined total surface was collected for each plot of maize. The samples were immediately weighed to provide the fresh weight (FW) of the sample and the samples were then stored. The samples were then taken back to the lab and dried in an oven, after which time there were removed from the oven and weighed to provide the dry weight (DW) for the sample. The water content per unit leaf area was then calculated for each plot using, for example, the equation:

$$WaterContent = \frac{FW - DW}{A}(g/cm^2)$$

Another example of a method of direct leaf moisture measurement is described in Afzal, A., and Mousavi, S., Estimation of Moisture in Maize Leaf by Measuring Leaf Dielectric Constant, Int. J. Agri. Biol., 10:66-68.

## 5. Model Formation

The exported spectral data was imported and aligned for plot in the software (see examples above). Partial least squares regression analysis was performed using the PLS Toolbox 4.0 (Eigenvector Research, Wenatchee, WA) in the Matlab workspace.

Partial least squares regression (PLS) of the leaf moisture to the selected spectra was performed for leaf moisture prediction. Spectra sets were ranked by their PLS leaf moisture prediction error. The number of latent variables in the PLS regression was automatically selected by the software (11 latent variables, see Figure 11). The spectra selected from this method predicted leaf moisture with the least root mean square error in leave one out cross validation among the spectra sets tested by the algorithm and a regression model was built with all of the spectra. A PLS regression model was built using the spectra selected from the algorithm and the 11 latent variables.

Similar to Example 1 for leaf chlorophyll concentration, Figure 11 shows leaf moisture as a continuous, quantitative variable, with the PLS model built out of cross validation. As seen in Figure 11, cross correlation is favorable.

## 6. Model Validation

This PLS regression model was used to predict leaf moisture using the later collected spectral data for the same plots. The predictions are shown in the Figure 11 for the leaf moisture predictions derived from later collected data. The comparisons of predicted leaf moisture and measured leaf moisture for the later collected data are indicated:

$R^2 = 0.939$
RMSEC = 0.61179.
RMSECV = 0.64766.

As shown in the figure, correlation points are distributed quite evenly along the line.

## 7. Use of Validated Model to Predict Leaf Moisture in a Test Data Set of Interest

The model 45 can be used to predict leaf moisture based on remote sensed data of other maize plants. Once validated, model 45 can be used to process remote sensed (RS) data set (of same or similar spectra) for the same type of plants, regardless of growing area, conditions, environmental factors, etc. and predict leaf moisture.

### E. Specific Exemplary Embodiment 3 -- Prediction of Level of Genome Introgression for a Backcross Experiment by Inverse Modeling

### 1. Constituent of Interest and Method

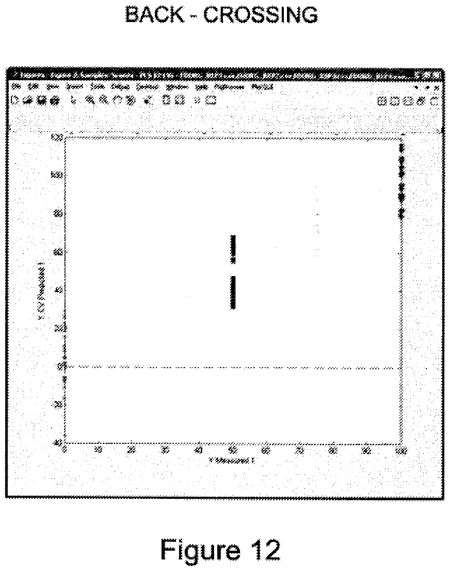

Figure 12 provides information about a third exemplary example, to predict level of genome introgression for a backcross experiment in maize.

Backcrossing can be used to improve inbred lines and a hybrid which is made using those inbreds. Backcrossing can be used to transfer a specific desirable trait from one line, the donor parent, to an inbred called the recurrent parent which has overall good agronomic characteristics yet that lacks the desirable trait. This transfer of the desirable trait into an inbred with overall good agronomic characteristics is accomplished by first crossing a recurrent parent to a donor parent (non-recurrent parent). The progeny of this cross is then mated back to the recurrent parent followed by selection in the resultant progeny for the desired trait to be transferred from the non-recurrent parent.

Typically after about four or more backcross generations with selection for the desired trait, the progeny will contain essentially all genes of the recurrent parent except for the genes controlling the desired trait. But the number of backcross generations can be smaller if molecular markers are used during the selection or elite germplasm is used as the donor parent. The last backcross generation is then selfed to give pure breeding progeny for the gene(s) being transferred.

Backcrossing can also be used in conjunction with pedigree breeding to develop new inbred lines. For example, an F1 can be created that is backcrossed to one of its parent lines to create a BC1. Progeny are selfed and selected so that the newly developed inbred has many of the attributes of the recurrent parent and yet several of the desired attributes of the non-recurrent parent.

As is well known in the art, the level of introgression of the gene of interest can vary for each backcross generation. Typically the success of introgression is 50% between two progeny of a first backcross generation; 75% for the second backcross generation; and then converges towards 100% for succeeding backcross generations. (e.g., 87.5%, 93.75%, 96.875%, 98.375%, ..., 99.99%), assuming one selects the progeny with the most genes of interest. The success of introgression, however, is not on a continuous basis (e.g., 0%-100%) but rather a "bucket" model of multiple levels, e.g., 50%, 75%, 87.5%, and so on.

Below is a brief description of the general nature of backcrossing. The present exemplary embodiment provides one test to predict the level of introgression in a plant.

A backcross conversion may produce a plant with a trait or locus conversion in at least one or more backcrosses, including at least 2 crosses, at least 3 crosses, at least 4 crosses, at least 5 crosses and the like.

The complexity of the backcross conversion method depends on the type of trait being transferred (single genes or closely linked genes as vs. unlinked genes), the level of expression of the trait, the type of inheritance (cytoplasmic or nuclear) and the types of parents included in the cross.

It is understood by those of ordinary skill in the art that for single gene traits that are relatively easy to classify, the backcross method is effective and relatively easy to manage. (See e.g., Hallauer et al. in Corn and Corn Improvement, Sprague and Dudley, 3rd ed. 1998). Desired traits that may be transferred through backcross conversion include, but are not limited to, waxy starch, sterility (nuclear and cytoplasmic), fertility restoration, grain color (white), nutritional enhancements, drought resistance, enhanced nitrogen utilization efficiency, altered nitrogen responsiveness, altered fatty acid profile, increased digestibility, low phytate, industrial enhancements, disease resistance (bacterial, fungal or viral), insect resistance, herbicide resistance and yield enhancements. In addition, an introgression site itself, such as an FRT site, Lox site or other site specific integration site, may be inserted by backcrossing and utilized for direct insertion of one or more genes of interest into a specific plant variety.

The locus conversion may result from either the transfer of a dominant allele or a recessive allele. Selection of progeny containing the trait of interest is accomplished by direct selection for a trait associated with a dominant allele. Transgenes transferred via backcrossing typically function as a dominant single gene trait and are relatively easy to classify.

Selection of progeny for a trait that is transferred via a recessive allele, such as the waxy starch characteristic, requires growing and selfing the first backcross generation to determine which plants carry the recessive alleles. Recessive traits may require additional progeny testing in successive backcross generations to determine the presence of the locus of interest. The last backcross generation is suitably selfed to give pure breeding progeny for the gene(s) being transferred, although a backcross conversion with a stably introgressed trait may also be maintained by further backcrossing to the recurrent parent with selection for the converted trait. Along with selection for the trait of interest, progeny can be selected for the phenotype and/or genotype of the recurrent parent.

## 2. Plants and Growth Conditions

A backcross experiment is conducted using traditional methods. The recurrent parent (e.g., an inbred) is known and recorded, as well as the donor line (carrying the gene of interest).

## 3. Collection of Reflected Spectral Information

As with the prior examples, spectral imaging by remote sensing is obtained from this calibration set of backcross experiment plants. Specifically, multi- or hyper-spectral data regarding the calibration plants is obtained from calibration samples at each backcross generation. This is available for X-block data for an inverse modeling software program.

## 4. Direct measurement of constituent of interest

By methods known in the art (e.g., genetic marker analysis and testing), each of the calibration plants is tested to confirm the level of introgression of the gene(s) of interest. This Y-block or reference data is thus also available for the modeling software. The software will have as inputs both the spectral data of each sample plant as well as a reference measurement of level of introgression for that plant. The software will not know ahead of time what spectra from the multi- or hyper-spectral data correlates with level of introgression.

## 5. Build Predictive Model

Model 45 is built with using the X-block calibration or training data with PLS methods. In contrast to prior examples which predict plant chlorophyll concentration or leaf moisture content, in this example model 45 is built to predict level of genome introgression for a backcross experiment. The software identifies the number of latent variables.

Figure 12 shows the cross-correlation curve for a model created under the method. The plot of Figure 12 shows quite good prediction of level of introgression for various sample plants at expected points (e.g., 50% and 75%). In this example, the calibration data was for only the first and second backcross generations. The results are good for those generations.

The results show good predictability of introgression success for those generations. If spectral X-block calibration data and Y block reference data were obtained from succeeding backcross generations, the model is built and validated for those also.

The method can be relatively fast with reasonable computer computational power. It can essentially be in real time. After the calibration model is built and validated, no direct measurement, like marker analysis, is necessary.

## 6. Validate and Use of Proposed Predictive Model

Using conventional validation methods, the model built by the calibration and reference data can be tested, and model 45 may then be used to provide estimates based on remotely sensed data of other maize plants.

As can be appreciated, the method is suitable for use during the breeding process for the selection (or non-selection) of plants for use in a backcrossing breeding program. The method may also be used to select for the genome of the recurrent parent and against the markers of the donor parent. Using this procedure, one can identify the amount of genome from the donor parent that remains in the selected plants. The procedure can also be used to reduce the number of crosses back to the recurrent parent needed in a backcrossing program.

## F. Specific Exemplary Embodiment 4 - Prediction of Photosynthesis in Maize by Inverse Modeling

### 1. Constituent and Methods

Using the methods described previously, imaging spectroscopy can be used to model photosynthesis activity over time in maize plants, and predict the same in test samples.

### 2. Plants and Growth Conditions

Calibration maize plants are grown in a greenhouse under controlled conditions.

### 3. Collection of Reflected Spectral Information

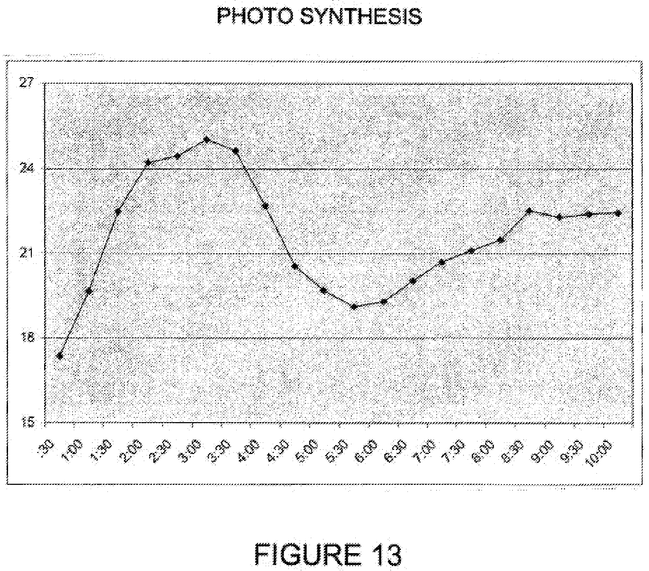

Multi- or hyper- spectral data was collected from the calibration plants from which X-block data is derived at pre-determined times over a total time period. In this example, X-block data can be obtained at every one-half hour over a continuous ten hour period (e.g., at 30 minutes from a starting time, 1 hour from start, 1 hour 30 minutes from start, ...., 9 hours 30 minutes from start, 10 hours from start (see time scale on horizontal axis of plot of Figure 13)).

### 4. Direct Measurement of Photosynthesis

Reference measurements of photosynthesis activity in the calibration sample plants can be directly measured and recorded for each of the one half hour measurement points of the X-block data to create the Y-block or reference data.

Figure 13 shows such a temporal plot of photosynthesis data of maize plants growing in a greenhouse measured by a Li-COR 6400 instrument (integrated gas exchange/fluorescence type instrument), commercially available from LI-COR Biotechnology, 4647 Superior Street, Lincoln, Nebraska USA 68504-0425. The photosynthesis activity varies over that measurement time period.

The X and Y data suitably have spectral data and reference measurements corresponding to each of those one-half hour points during the period.

### 5. Model Formation

A commercially available software program produces a prediction model from inverse modeling methodology and data analysis. As with prior examples, the program may construct an inverse model of level of photosynthesis activity using multivariate calibration based on the X and Y data and partial least squares regression (PLS-R). The number of latent variables in the PLS regression can be automatically determined by the software. Least root mean square error in leave one out cross validation or in other techniques may be used to build the model with all of the spectra.

### 6. Model Validation

The designer selects the type of validation for a desired level of stability and robustness.

### 7. Use of the Model

Using the methods described previously, imaging spectroscopy can be used to model photosynthesis activity over time in maize plants, and predict the same in test samples.

## G. Specific Exemplary Embodiment 5 - Prediction of drought stressed or non-drought stressed maize plants through inverse modeling

### 1. Constituent of Interest and Methods

A model is created to predict whether a maize plant is drought stressed on non-drought stressed. The constituent, here also considered to be a characteristic, to be modeled and predicted is whether a maize plant is drought tolerant or not.

### 2. Plants and Growth Conditions

For the experiment, maize inbreds and hybrids were planted and grown under at least two different watering conditions.

### 3. Collection of Reflected Spectral Information

Multi- or hyper-spectral data was collected for the plots by remote sensing imaging from which X-block calibration data can be extracted.

### 4. Direct Measurement of Leaf Moisture

Known in the art techniques were used to directly evaluate the different plants and classify them as drought stressed or non-stressed, to provide Y-block reference values for a reasonable range of drought stressed to non-stressed plants.

## 5. Model Formation

An inverse modeling approach was used to develop a model using commercially available software.

In this example PLS was used but with the addition of Discriminant Analysis (PLS-DA). This can be used to classify predictions of the model. Other types of classification methods are known. Examples include but are not limited to SIMCA and knn (k nearest neighbor).

The method produces a PLS-based calibration model, but creates distinct classes using sample classes in the X-block calibration data. A variety of classification options exist. The designer is allowed by the software to select from different methods.

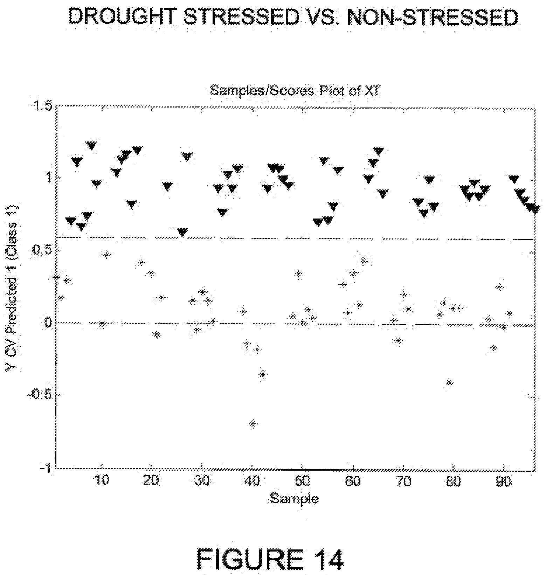

Figure 14 shows a discriminant analysis plot showing a sample/score plot for a plurality of samples. In this case the drought stressed plants were assigned a Y-block reference value of 1, while the well watered plants were assigned a Y-block reference value of 0. The model minimizes the least squares error between the predicted classes and the assigned reference. The model defined threshold was approximately 0.5. Predicted values above this line were expected at the 95% confidence level to be drought stressed. Below this threshold the samples were predicted to be well watered (non-stressed). The triangles show good separation of scores of a set of samples indicating drought stress as a class 1. The plot shows other samples (star symbols) that do not fall within class 1 and thus are either non-stressed or have less drought stress, depending on the user criteria.

Loading of a specific input viable may depend on the stress experienced by the plant, and on when in the lifecycle of the plant the stress is applied. The ability to see how the effect of the different input variables changes with different types of stress and time of stress may provides a powerful tool in untangling convoluting factors that separate "susceptible" from "tolerant" plants.

PLS-DA allows either separation of one class from all others, or separation into a pre-selected number of classes.

## 6. Model Validation

The designer can select the type of validation, if desired.

## 7. Use Model

This model was used to predict whether a plant is likely drought tolerant or not. The modeling may potentially classify plants into more classes. One example is to use a drought tolerance scale (e.g., rated from 1 to 9). Such scales are known in the art. This can be an efficient way to screen plants for drought tolerance.

## *H. Specific Exemplary Embodiment 6 - Prediction of soybean genotype*

### 1. Constituent of Interest and Methods

A model is created to predict the genotype of a soybean plant. The constituent, here also considered to be a characteristic, to be modeled and predicted is the genotype response to a controlled environment.

### 2. Plants and Growth Conditions

For the experiment two soybean varieties were grown under similar controlled conditions.

### 3. Collection of Reflected Spectral Information

Multi- or hyper-spectral data was collected for the plots by remote sensing imaging from which X-block calibration data can be extracted.

### 4. Direct Measurement of Leaf Moisture

Reference data was provided by the genetic source of the seeds. Y-block reference were the numerical representations of the genotype classes.

### 5. Model Formation

An inverse modeling approach was used to develop a model using commercially available software.

In this example PLS was used but with the addition of Discriminant Analysis (PLS-DA). This can be used to classify predictions of the model. Other types of classification methods are known. Examples include but are not limited to SIMCA and knn (k nearest neighbor).

The method produces a PLS-based calibration model, but creates distinct classes using sample classes in the X-block calibration data. A variety of classification options exist. The designer is allowed by the software to select from different methods.

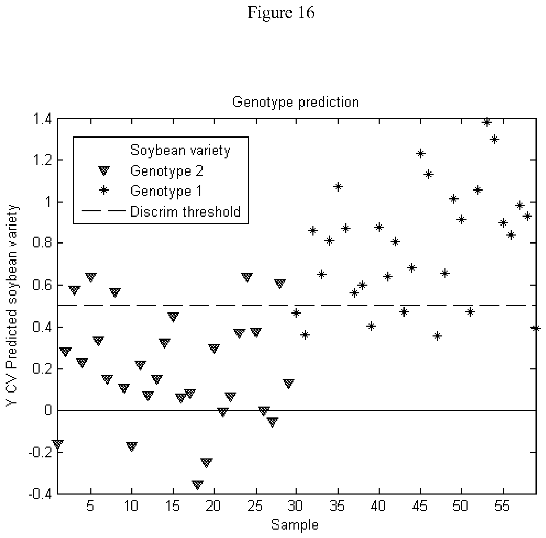

Figure 16 shows a discriminant analysis plot showing a sample/score plot for a plurality of samples. In this case the variety one plants was assigned a Y-block reference value of 1, while the other variety (variety two) were assigned a Y-block reference value of 0. The model minimizes the least squares error between the predicted classes and the assigned reference. The model defined threshold was approximately 0.5. Predicted values above this line were expected at the 95% confidence level to variety one. Below this threshold the samples were predicted to variety two. The triangles show good separation of scores of a set of samples, indicating variety two. The plot shows other samples (star symbols) that do not fall within class 0 and thus are the other variety (variety one).

## 6. Model Validation

The model was validated through cross validation.

## 7. Use Model

This model was used to predict the variety of a soybean based on its response to a controlled environment. The modeling classifies plants into more classes.

### *I. Specific Exemplary Embodiment 7 - Prediction of perturbation of plants with different constructs and events of transgene in a single genotype*

### 1. Constituent of Interest and Methods

A model is created to predict whether a maize plant is altered by transgenic constructs or events. The constituent (also considered a characteristic) to be modeled and predicted is whether a maize plant perturbation results from the transgene.

### 2. Plants and Growth Conditions

For the experiment, maize hybrids comprising an insertion of a transgene were planted and grown along with a control wild type genotype.

### 3. Collection of Reflected Spectral Information

Multi- or hyper-spectral data was collected for the plots by remote sensing imaging from which X-block calibration data can be extracted.

### 4. Direct Measurement of Leaf Moisture

Existing techniques were used to directly evaluate the genotypes of the plants and classify them as transgenic or wild type. The Y-block was again the wild type and transgenic classes.

### 5. Model Formation

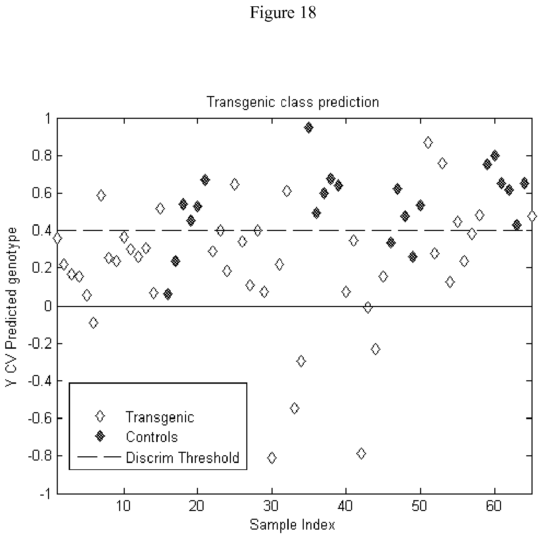

An inverse modeling approach was used to develop a model using commercially available software.
In this example, PLS was used but with the addition of Discriminant Analysis (PLS-DA). This can be used to classify predictions of the model. Other types of classification methods are known. Examples include but are not limited to SIMCA and knn (k nearest neighbor).
The method produces a PLS-based calibration model, but creates distinct classes using sample classes in the X-block calibration data. A variety of classification options exist. The designer is allowed by the software to select from different methods.

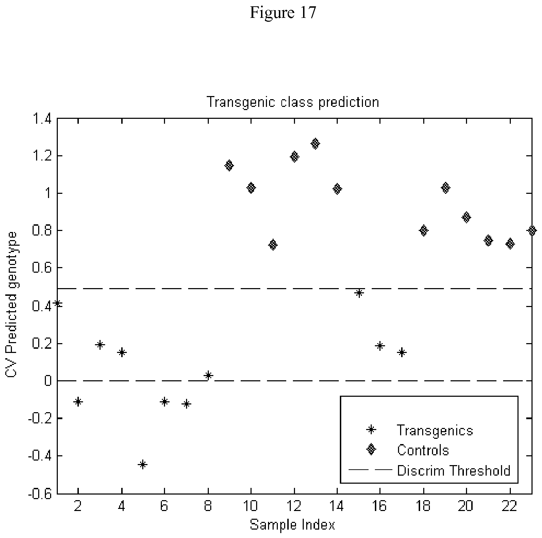

Figure 17 shows a discriminant analysis plot based on the cross validation predictions showing a sample/score plot for a plurality of samples. In this case the wild type plants were assigned a Y-block reference value of 1, while the transgenic plants were assigned a Y-block reference value of 0. The model minimizes the least squares error between the predicted classes and the assigned reference. The model defined threshold was approximately 0.5. Predicted values above this line were expected at the 95% confidence level to be wild type. Below this threshold the samples were predicted to be transgenic. The black diamonds show good separation of scores of a set of samples indicating the perturbation of the transgene.
Such perturbation may, in some examples, include an effect (negative) of the transgene insertion on the agronomics of the plant background. The perturbation may also mean that the transgene itself is perturbed, corrupted, or altered in the insertion event. Perturbation may also include the situation where the transgene results in a more effective or desirable plant outcome. The perturbation may also occur in the pre-transcription or post-transcription stage.
The plot shows other samples (star symbols) that do not fall within this diamond class and are the control plants. Figure 18 is for a different construct where only a few events, highlighted in the dashed ellipse, are separated from the controls in the cross validation predictions of the PLSDA model. Each bar is the difference in the average class predictions of the wild types and transgenics. Greater separation as expressed by the difference is associated with stronger perturbation modeled from the hyperspectral images.

### 6. Model Validation

The designer can select the type of validation.

### 7. Use Model

This model was used to predict the degree to which a common genotype was perturbed by different transgenic events and constructs. The modeling classifies plants into more classes.

### *J. Specific Exemplary Embodiment 8 - Prediction of perturbation of plants from multiple genotypes with the same transgene*

### 1. Constituent of Interest and Methods

A model is created to predict whether a maize plant is altered by a transgene affecting its hyperspectral image. The constituent, here also considered to be a characteristic, to be modeled and predicted is whether a maize plant is perturbed by a transgene. The degree and direction of the perturbation can be used to select constructs and events in trasgene analysis.

## 2. Plants and Growth Conditions

For the experiment, maize inbreds with and without a trait transgene were grown in a controlled environment.

## 3. Collection of Reflected Spectral Information

Multi- or hyper-spectral data was collected for the plots by remote sensing imaging from which X-block calibration data can be extracted.

## 4. Direct Measurement of Leaf Moisture

Known in the art techniques were used to directly assign the genotype. The Y-block reference values were again wild type and transgenic.

## 5. Model Formation

An inverse modeling approach was used to develop a model using commercially available software.

In this example PLS was used but with the addition of Discriminant Analysis (PLS-DA). This can be used to classify predictions of the model. Other types of classification methods are known. Examples include but are not limited to SIMCA and knn (k nearest neighbor).

The method produces a PLS-based calibration model, but creates distinct classes using sample classes in the X-block calibration data. A variety of classification options exist. The designer is allowed by the software to select from different methods.

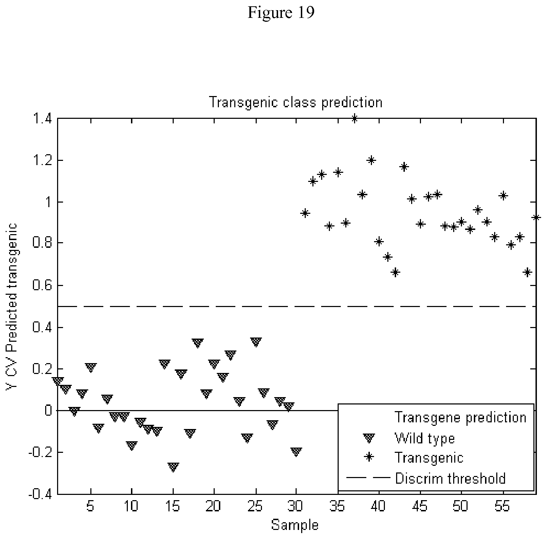

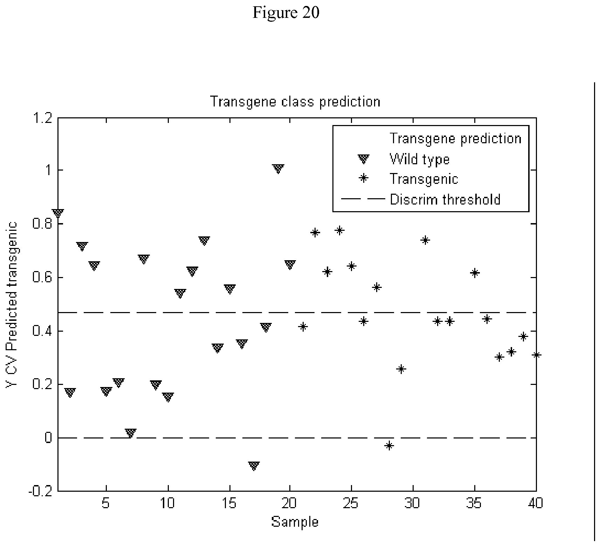

Figure 19 shows a discriminant analysis plot based on the cross validation predictions showing a sample/score plot for a plurality of samples. In this case the transgenic plants were assigned a Y-block reference value of 1, while the wild type plants were assigned a Y-block reference value of 0. The model minimizes the least squares error between the predicted classes and the assigned reference. The model defined threshold was approximately 0.5. Predicted values above this line were expected at the 95% confidence level to be transgenic. Below this threshold the samples were predicted to be wild type. The stars show good separation of scores of a set of samples indicating the perturbation of the transgene in one genotype. The plot shows other samples, triangles that do not fall within this diamond class and are the control plants. Figure 20 is for a different genotype where the perturbation to the hyperspectral image is not sufficient for discriminant analysis modeling.

## 6. Model Validation

The designer can select the type of validation.

## 7. Use Model

The models built in this example are suitably used to predict the response of genotypes to a transgene. Perturbations in the hyperspectral image consistent with a desired transgenic phenotype are used to select genotypes for transformation.

*Alternative Embodiments*

It will be appreciated that the above-described exemplary embodiments are but a few forms the invention can take. Variations obvious to those skilled in the art will be included within the invention. Variations or alternatives such as are obvious to those skilled in the art are within the scope of this invention.

A few examples of options and alternatives for the invention are set forth below.

### K. Samples (Calibration and Test)

The examples below relate specifically to maize, but any other plants are also suitable. As used herein, the term "plant" includes reference to an immature or mature whole plant, including a plant that has been detasseled or from which seed or grain has been removed. Seed or embryo that will produce the plant is also considered to be the plant.

The samples can be plots of plants or individual plants. The spectroscopic imaging may be of a set or plot of plants or individual plants. If there is sufficient resolution capability, an image of a plot of plants is resolved into individual plants.

### L. Data Collection and Type

A variety of ways exist to collect the spectral and reference data. The designer can select full wavelength or hyper spectral, multi-spectral, or other spectral data sets. It may be possible to use the methods with other than multi- or hyper-spectral data. Models with relatively large sample sizes and with hyper-spectral imaging are especially suitable. Hyper spectral remote sensing, also known as imaging spectroscopy, is a relatively new technology. It combines imaging and spectroscopy in a single system which often includes large data sets. However, the user may discover or decide that certain spectra are irrelevant or not needed, and exclude them from the modeling. Moreover, the user can utilize the methods with multi-spectral data.

The invention is not limited to any one type of remote sensing or spectroscopic sensing. Some examples are mentioned in the Background of the Invention. The data can consist of spatial, spectral, radiometric, and/or temporal resolutions. Any and all of these can vary according to the sensors and their carriers, as well as sensing conditions. There can be correction or adjustment of the images. One example is the use of image analysis, which is automated computer-aided applications. The data can be stored or archived in a number of digital storage mediums.

### M. Validation Methods

A number of validation techniques are possible. Common types include, but are not limited to: (a) holdout validation, (b) *K*-fold cross-validation, (c) leave-one-out cross validation, and (d) random subsets. See Martens and Naes 1989 for examples of others.

As explained in Martens and Naes 1989, some validation and/or model building techniques can include some calibration samples in test samples.

Variability analysis in some of the examples includes the coefficient of determination ("$R^2$") method. Others are possible (see Martens and Naes 1989).

### N. Apparatus

The specific components, their functions and features, and other aspects of the remote sensors, the computer system, and the direct measurement system can vary according to need or desire. Many of the components can be made portable for field use. On the other hand, the methods allow data gathering and then transport to an off-site location or laboratory for data analysis.

### O. Mathematical Transfer Methods

Martens and Naes 1989 describe different data analysis techniques. PLS is a quantitative spectral decomposition technique that is closely related to Principal Component Regression (PCR). However the decomposition is performed in a slightly different fashion. Instead of first decomposing the spectral matrix into a set of eigenvectors and scores, and regressing them against the concentrations as a separate step, PLS actually uses the concentration information during the decomposition process. This causes spectra containing higher constituent concentrations to be weighted more heavily than those with low concentrations. Thus, the eigenvectors (loading vectors) and scores calculated using PLS are quite different from those of PCR. The main idea of PLS is to get as much concentration information as possible into the first few loading vectors.

Discriminant Function Analysis is used to determine which variable discriminates between two or more naturally occurring groups. Computationally, it is very similar to analysis of variance (ANOVA).

Others are, of course, possible. Martens and Naes 1989 discuss consideration for designing experiments using a variety of multivariate analysis methods. The designer can select a method based on need or desire. As mentioned, some examples are PCA, Regression Analysis, MLR, PLS-R, and three way PLS- R, PCR with classification or without, PLS-DA, ANOVA, SIMCA classification, K-means clustering, and Discriminant Analysis.

Another possibility is artificial neural network learning (see US 5,252,829). It uses neural networks to identify correlations, and may be used to build an inverse model.

### P. Data Fitting

The methods can be used to derive stronger correlations and give greater weight to certain things, even over what is currently thought to be relevant or right. Various pretreatment, post treatment, and weighting or data fitting or smoothing methods exist (see Martens and Naes 1989).

### Q. Combination with Other Methods

Combinations of predictions for different constituents may be used. From this correlations, or other useful knowledge may be developed.

Furthermore, models created by the present invention may be compared to identified spectra based on other models. As one example, the invention may incorporate spectroscopic data (as discussed above) as well as data from ELISA or other suitable assays. In this way, the user's model may include multiple data types, which may be done for validation or to create even better predictive techniques. For example, a user that classifies plants based only on genetic markers and then selects plants based on those markers may not necessarily be selecting plants that have the optimal phenotype for the user's needs. Accordingly, combining the descrbed modeling techniques together with classifying plants by one or more phenotypes will enable the user to select plants that are optimal in both markers and phenotypes.

### R. Constituents or Characteristics

Those skilled in the art will recognize that modifications, alternatives, and variations are possible to achieve the results of Examples. And further, those skilled in the art will appreciate that the Examples, and variations thereof, can be applied in analogous ways to predict other constituents or characteristics in plants.

### S. Applications

The methods described herein are indicated to be applicable to a variety of constituents and characteristics of plants. They can be used as a discrimination tool. Predictions and models can be applied to whole plant traits.

A specific example is prediction of chlorophyll for a whole field. This can be used to predict which fields are likely to produce the highest yield early for plant advancement.

Another example relates to plant physiology. The method can predict physiological conditions or characteristics in living plants.

## 1. Breeding/Selection

Another example is to use one or more of the prediction models in selection of plants, and/or seed from the plants, for further use. The prediction methods described earlier can be used for selection of plants for breeding, genetic testing, or commercial production. They can be used to exclude or predict quickly, early, and with no research.

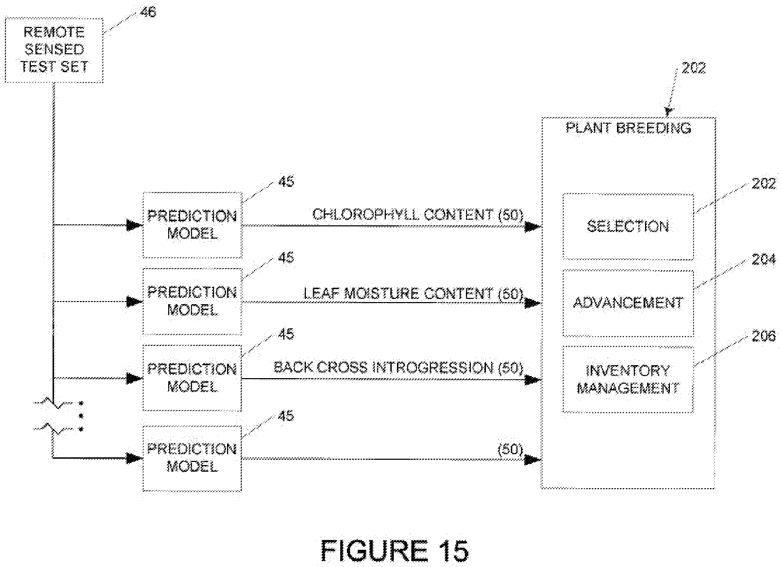

Selection in this context includes, but is not limited to, what is illustrated in Figure 15. A plant can be selected for further use in a breeding program based on the predicted constituent from one or more of the models. It can be selected for further use in a plant advancement experiment, such as a genetic advancement experiment. It can be selected for use in producing commercial quantities of the plant variety.

Once model 45 is validated for a constituent or characteristic of the plant, a test set of remote sensed spectroscopic imaging 46 is introduced to model 45. The results for a test set 46 can be input to a model 45 and a prediction of a constituent or characteristic 50 (whether chlorophyll content, leaf moisture content, level of introgression of backcross, etc.) can be used in decisions regarding, e.g., whether the continue to use the plant variety in further breeding 202. This suitably includes selection for a breeding program 202, selection for genetic advancement experiment 204, or commitment to produce a given amount of the plant for inventory management of commercial quantities of seed from the variety 206. Other of these types of "selection" decisions are possible with just one prediction, or with combinations of predictions, which can derived from the same or different remote sensed imaging of the test set.

One or more of the predictions is suitably used in conjunction with a selection index. Such a selection index gives a single measure of a hybrid's worth based on information regarding one or more of the predicted characteristics. A maize breeder may utilize his or her own selected characteristic or set of characteristics for the selection index.

Examplary applications of the tests include, but are not limited to, such applications as:

> a. Plant breeding processes for traits or characteristics;
> b. Identification of seed with desired traits or characteristics for subsequent germination to maturity in a field or green house;
> c. Selection based on presence or absence of desired trait.

The goal of plant breeding is to combine, in a single variety or hybrid, various desirable traits. For field crops, these traits may include resistance to diseases and/or insects, resistance to heat and/or drought, reducing the time to crop maturity, greater yield, and/or better agronomic quality. With mechanical harvesting of many crops, uniformity of plant characteristics such as germination, stand establishment, growth rate, maturity, and plant and/or ear height is important. Traditional plant breeding is an important tool in developing new and improved commercial crops.

The development of maize hybrids in a maize plant breeding program requires, in general, the development of homozygous inbred lines, the crossing of these lines, and the evaluation of the crosses. Development of other plants (besides maize) typically implicates similar considerations. Maize plant breeding programs combine the genetic backgrounds from two or more inbred lines or various other germplasm sources into breeding populations from which new inbred lines are developed by selfing and selection of desired phenotypes. Hybrids also can be used as a source of plant breeding material or as source populations from which to develop or derive new maize lines. Plant breeding techniques known in the art and used in a maize plant breeding program include, but are not limited to, recurrent selection, mass selection, bulk selection, backcrossing, making double haploids, pedigree breeding, open pollination breeding, restriction fragment length polymorphism enhanced selection, genetic marker enhanced selection, and transformation. Often combinations of these techniques are used. The inbred lines derived from hybrids can be developed using plant breeding techniques as described above. New inbreds are crossed with other inbred lines and the hybrids from these crosses are evaluated to determine which of those have commercial potential.

Many factors are considered in the art of plant breeding, such as the ability to recognize important morphological and physiological characteristics, the ability to design evaluation techniques for genotypic and phenotypic traits of interest, and the ability to search out and exploit the genes for the desired traits in new or improved combinations. The oldest and most traditional method of analysis is the observation of phenotypic traits, but genotypic analysis may also be used. The present invention provides a new tool that provides useful information for early and efficient plant selection.

## Claims

1. A method of estimating a plant characteristic, comprising:

> a. building a predictive model using inverse modeling using:
>
>> i. a first set of spectroscopic data from a first plant population, and
>> ii. corresponding measured characteristic data sets from the first plant population; and,
>
> b. applying the model to a second set of spectroscopic data from a second plant, a second plant population, or both, so as to estimate the characteristic in the second plant.

2. The method of claim 1, wherein:

   a) the first set of spectroscopic data, the second set of spectroscopic data, or both, comprise spectra from one or more wavelengths from the visible light spectrum, from the infrared spectrum, the near- infrared spectrum, the ultraviolet spectrum, or any combination thereof; and/or
   b) the first set of spectroscopic data, the second set of spectroscopic data, or both, comprise multiple spectra.

3. The method of claim 1, wherein the first set, the second set, or both sets of spectroscopic data are from a predetermined wavelength range.

4. The method of any one of claims 1-3, wherein:

   a) the first set of spectroscopic data, the second set of spectroscopic data, or both, comprise hyperspectral data; and/or
   b) the inverse modeling comprises a partial least squares regression analysis, a partial least squares discriminant analysis, a principal component analysis, or any combination thereof; and/or
   c) the characteristic comprises an agronomic trait, moisture content, chlorophyll concentration, photosynthesis activity, introgression, drought stress, drought tolerance, herbicide resistance, response to a chemical, yield, stress tolerance, nitrogen utilization, insect resistance, disease resistance, a quantitative trait locus, a transgene, a transgenic trait, or any combination thereof; and/or
   d) the first plant population comprises at least one maize plant.

5. The method of any one of claims 1-4, wherein at least a portion of the first set of spectroscopic data comprises spectra from one or more plants lacking a transgenic trait, and/or at least a portion of the first set of spectroscopic data comprises spectra from one or more plants possessing a transgenic trait.

6. The method of claim 5, wherein the transgenic trait comprises insect resistance, corn rootworm resistance, herbicide resistance, drought tolerance, nitrogen utilization, stress tolerance, disease resistance, yield, or any combination thereof.

7. The method of any one of claims 1-6, further comprising

   a. assigning, on the basis of the predictive model, a first relative score to at least one plant in the first population;
   b. assigning, on the basis of the predictive model, a second relative score to the second plant, to at least one plant in the second population, or both; and
   c. calculating the difference between the first relative score and the second relative score.

8. The method of claim 6, further comprising adjusting the model to reduce the difference between the estimate of the characteristic in the second plant and a corresponding measurement the characteristic in the second plant.

9. The method of any one of claims 1-8, wherein the method estimates the characteristic at a future point in time.

10. The method of claim 1, wherein at least one computer processor is used to construct by inverse modeling the predictive model of claim 1.

11. The method of claim 1 for predicting a level of genome introgression for a backcross experiment, wherein a measured level of genome introgression data as input variables is used, optionally wherein, the spectroscopic data comprises hyper-spectral imaging of reflectance, and/or wherein the measured data and spectroscopic data sets are based on (i) plural genotypes, or (ii) differing growing conditions, or (iii) differing environmental conditions.

12. The method of any one of claims 1-11, further comprising using the prediction for selection of a plant or its seed, optionally wherein the selection comprises at least one of (a) selection for breeding, (b) selection for genetic advancement, or (c) selection for production of commercial quantities.

13. The method of any one of claims 1-12, further comprising a step of validating the model, or wherein building the predictive model comprises

   (a) obtaining spectroscopic data from one or more progeny plants of a backcrossing experiment relative to a desired parental line of plants; and
   (b) correlating the spectroscopic data to the one or more progeny plants.

14. A system (90) for estimating a plant characteristic, comprising:

   a. a device capable of collecting spectroscopic absorbance data from one or more plants physically distant from the device;

b. a memory unit capable of storing collected spectroscopic absorbance data, measured values of a plant characteristic corresponding to the spectroscopic absorbance data; and

c. a computing device (92) capable of building a predictive model using inverse modeling using a first set of spectroscopic data from a first plant population, and corresponding measured characteristic data sets from the first plant population; and, applying the model to a second set of spectroscopic data from a second plant, a second plant population, or both, so as to estimate the characteristic in the second plant.

15. The system of claim 14, wherein the device capable of collecting spectroscopic absorbance data is capable of communicating data to the memory unit, the computing device (92), or both.

**Patentansprüche**

1. Verfahren zum Schätzen einer Pflanzeneigenschaft, umfassend:

   a. Erstellen eines Vorhersagemodells mit inverser Modellierung unter Verwendung:

   i. eines ersten Satzes spektroskopischer Daten einer ersten Pflanzenpopulation, und
   ii. entsprechender gemessener charakteristischer Datensätze aus der ersten Pflanzenpopulation; und,

   b. Anwenden des Modells auf einen zweiten Satz spektroskopischer Daten von einer zweiten Pflanze, einer zweiten Pflanzenpopulation oder beidem, um die Eigenschaft in der zweiten Pflanze zu schätzen.

2. Verfahren nach Anspruch 1, wobei:

   a) der erste Satz spektroskopischer Daten, der zweite Satz spektroskopischer Daten oder beide Spektren von einer oder mehreren Wellenlängen des sichtbaren Lichtspektrums, des Infrarotspektrums, des nahen Infrarotspektrums, des ultravioletten Spektrums oder einer beliebigen Kombination davon umfassen; und/oder
   b) der erste Satz spektroskopischer Daten, der zweite Satz spektroskopischer Daten oder beide mehrere Spektren umfassen.

3. Verfahren nach Anspruch 1, wobei der erste Satz, der zweite Satz oder beide Sätze von spektroskopischen Daten aus einem vorbestimmten Wellenlängenbereich stammen.

4. Verfahren nach einem der Ansprüche 1 bis 3, wobei

   a) der erste Satz spektroskopischer Daten, der zweite Satz spektroskopischer Daten oder beide hyperspektrale Daten umfassen; und/oder
   b) die inverse Modellierung eine partielle Regressionsanalyse nach kleinsten Quadraten, eine partielle Diskriminanzanalyse nach kleinsten Quadraten, eine Hauptkomponentenanalyse oder eine beliebige Kombination davon umfasst; und/oder
   c) die Eigenschaft Folgendes umfasst: ein agronomisches Merkmal, einen Feuchtigkeitsgehalt, eine Chlorophyllkonzentration, eine Photosyntheseaktivität, eine Introgression, eine Trockenheitsbelastung, eine Trockenheitstoleranz, eine Herbizidresistenz, eine Reaktion auf eine Chemikalie, einen Ertrag, eine Belastungstoleranz, eine Stickstoffverwertung, eine Insektenresistenz, eine Krankheitsresistenz, einen quantitativen Merkmal-Locus, ein Transgen, ein transgenes Merkmal oder eine beliebige Kombination davon; und/oder
   d) die erste Pflanzenpopulation mindestens eine Maispflanze umfasst.

5. Verfahren nach einem der Ansprüche 1 bis 4, wobei mindestens ein Teil des ersten Satzes spektroskopischer Daten Spektren von einer oder mehreren Pflanzen umfasst, denen ein transgenes Merkmal fehlt,
   und/oder mindestens ein Teil des ersten Satzes spektroskopischer Daten Spektren von einer oder mehreren Pflanzen umfasst, die ein transgenes Merkmal besitzen.

6. Verfahren nach Anspruch 5, wobei das transgene Merkmal Insektenresistenz, Maiswurzelbohrerresistenz, Herbizidresistenz, Trockenheitstoleranz, Stickstoffverwertung, Belastungstoleranz, Krankheitsresistenz, Ertrag oder eine beliebige Kombination davon umfasst.

7. Verfahren nach einem der Ansprüche 1 bis 6, das ferner Folgendes umfasst:

   a. Zuweisen einer ersten relativen Bewertung basierend auf dem Vorhersagemodell zu mindestens einer Pflanze in der ersten Population;
   b. Zuweisen einer zweiten relativen Bewertung basierend auf dem Vorhersagemodell zu der zweiten Pflanze, zu mindestens einer Pflanze in der zweiten Population oder beiden; und
   c. Berechnen der Differenz zwischen der ersten relativen Bewertung und der zweiten relativen Bewertung.

8. Verfahren nach Anspruch 6, das ferner das Anpassen des Modells umfasst, um die Differenz zwischen der Schätzung der Eigenschaft in der zweiten Anlage und einer entsprechenden Messung der Eigenschaft in der zweiten Anlage zu verringern.

9. Verfahren nach einem der Ansprüche 1 bis 8, wobei das Verfahren die Eigenschaft zu einem zukünftigen Zeitpunkt schätzt.

10. Verfahren nach Anspruch 1, wobei mindestens ein Computerprozessor verwendet wird, um das Vorhersagemodell nach Anspruch 1 durch inverses Modellieren zu konstruieren.

11. Verfahren nach Anspruch 1 zum Vorhersagen eines Ausmaßes an Genom-Introgression für ein Rückkreuzungsexperiment, wobei ein gemessenes Niveau von Genom-Introgressionsdaten als Eingabevariablen verwendet wird, wobei die spektroskopischen Daten optional eine hyperspektrale Abbildung des Reflexionsvermögens umfassen, und/oder wobei die gemessenen Daten und spektroskopischen Datensätze auf (i) mehreren Genotypen oder (ii) unterschiedlichen Wachstumsbedingungen oder (iii) unterschiedlichen Umweltbedingungen basieren.

12. Verfahren nach einem der Ansprüche 1 bis 11, das ferner die Verwendung der Vorhersage zur Auswahl einer Pflanze oder ihres Samens umfasst, wobei die Auswahl optional (a) Selektion zur Zucht, (b) Selektion zur genetischen Weiterentwicklung und/oder (c) Selektion zur Produktion kommerzieller Mengen umfasst.

13. Verfahren nach einem der Ansprüche 1 bis 12, das ferner einen Schritt der Validierung des Modells umfasst, oder wobei das Erstellen des Vorhersagemodells Folgendes umfasst:

(a) Erhalten spektroskopischer Daten von einer oder mehreren Nachkommenpflanzen eines Rückkreuzungsexperiments relativ zu einer gewünschten Elternlinie von Pflanzen; und
(b) Korrelieren der spektroskopischen Daten mit der einen oder den mehreren Nachkommenpflanzen.

14. System (90) zum Schätzen einer Pflanzeneigenschaft, das Folgendes umfasst:

a. eine Vorrichtung, die in der Lage ist, spektroskopische Absorptionsdaten von einer oder mehreren Pflanzen zu sammeln, die physisch von der Vorrichtung entfernt sind;
b. eine Speichereinheit, die gesammelte spektroskopische Absorptionsdaten speichern kann, wobei gemessene Werte einer Pflanzeneigenschaft den spektroskopischen Absorptionsdaten entsprechen; und
c. eine Rechenvorrichtung (92), die in der Lage ist, ein Vorhersagemodell unter Verwendung einer inversen Modellierung unter Verwendung eines ersten Satzes spektroskopischer Daten aus einer ersten Pflanzenpopulation und entsprechender gemessener charakteristischer Datensätze aus der ersten Pflanzenpopulation aufzubauen; und Anwenden des Modells auf einen zweiten Satz spektroskopischer Daten von einer zweiten Pflanze, einer zweiten Pflanzenpopulation oder beidem, um die Eigenschaft in der zweiten Pflanze zu schätzen.

15. System nach Anspruch 14, wobei die Vorrichtung, die spektroskopische Absorptionsdaten sammeln kann, Daten an die Speichereinheit, die Rechenvorrichtung (92) oder beide übermitteln kann.

## Revendications

1. Procédé d'estimation d'une caractéristique végétale, comprenant :

a. la construction d'un modèle prédictif à l'aide de la modélisation inverse en utilisant :

i. un premier ensemble de données spectroscopiques provenant d'une première population végétale, et
ii. des ensembles de données caractéristiques mesurées correspondants provenant de la première population végétale ; et

b. l'application du modèle à un deuxième ensemble de données spectroscopiques provenant d'une deuxième plante, d'une deuxième population végétale, ou des deux, de manière à estimer la caractéristique dans la deuxième plante.

2. Procédé selon la revendication 1, dans lequel :

a) le premier ensemble de données spectroscopiques, le deuxième ensemble de données spectroscopiques, ou les deux, comprennent des spectres d'une ou plusieurs longueurs d'onde du spectre de la lumière visible, du spectre infrarouge, du spectre proche-infrarouge, du spectre ultraviolet ou toute combinaison de ceux-ci ; et / ou
b) le premier ensemble de données spectroscopiques, le deuxième ensemble de données spectroscopiques, ou les deux, comprennent plusieurs spectres.

3. Procédé selon la revendication 1, dans lequel le premier ensemble, le deuxième ensemble ou les deux ensembles de données spectroscopiques proviennent d'une plage de longueurs d'onde prédéterminée.

**4.** Procédé selon l'une quelconque des revendications 1 à 3, dans lequel :

a) le premier ensemble de données spectroscopiques, le deuxième ensemble de données spectroscopiques, ou les deux, comprennent des données hyperspectrales ; et / ou
b) la modélisation inverse comprend une analyse de régression des moindres carrés partiels, une analyse discriminante des moindres carrés partiels, une analyse en composantes principales, ou toute combinaison de celles-ci ; et / ou
c) la caractéristique comprend une caractéristique agronomique, la teneur en humidité, la concentration en chlorophylle, l'activité de photosynthèse, l'introgression, le stress dû à la sécheresse, la tolérance à la sécheresse, la résistance aux herbicides, la réponse à un produit chimique, le rendement, la tolérance au stress, l'utilisation de l'azote, la résistance aux insectes, la résistance aux maladies, un locus de caractéristique quantitative, un transgène, une caractéristique transgénique ou toute combinaison de ceux-ci ; et / ou
d) la première population végétale comprend au moins une plante de maïs.

**5.** Procédé selon l'une quelconque des revendications 1 à 4, dans lequel au moins une partie du premier ensemble de données spectroscopiques comprend des spectres d'une ou plusieurs plantes dépourvues d'une caractéristique transgénique, et / ou au moins une partie du premier ensemble de données spectroscopiques comprend les spectres d'une ou plusieurs plantes possédant une caractéristique transgénique.

**6.** Procédé selon la revendication 5, dans lequel la caractéristique transgénique comprend la résistance aux insectes, la résistance à la chrysomèle des racines du maïs, la résistance aux herbicides, la tolérance à la sécheresse, l'utilisation de l'azote, la tolérance au stress, la résistance aux maladies, le rendement ou toute combinaison de ceux-ci.

**7.** Procédé selon l'une quelconque des revendications 1 à 6, comprenant en outre

a. l'attribution, sur la base du modèle prédictif, d'un premier score relatif à au moins une plante de la première population ;
b. l'attribution, sur la base du modèle prédictif, d'un deuxième score relatif à la deuxième plante, à au moins une plante de la deuxième population, ou aux deux ; et
c. le calcul de la différence entre le premier score relatif et le deuxième score relatif.

**8.** Procédé selon la revendication 6, comprenant en outre l'ajustement du modèle pour réduire la différence entre l'estimation de la caractéristique dans la deuxième plante et une mesure correspondante de la caractéristique dans la deuxième plante.

**9.** Procédé selon l'une quelconque des revendications 1 à 8, dans lequel le procédé estime la caractéristique à un instant futur.

**10.** Procédé selon la revendication 1, dans lequel au moins un processeur informatique est utilisé pour construire par modélisation inverse le modèle prédictif de la revendication 1.

**11.** Procédé selon la revendication 1 pour prédire un niveau d'introgression génomique pour une expérience de rétrocroisement, dans lequel un niveau mesuré de données d'introgression génomique comme variables d'entrée est utilisé, éventuellement dans lequel les données spectroscopiques comprennent une imagerie hyperspectrale de réflectance, et / ou dans lequel les données mesurées et les ensembles de données spectroscopiques sont basés sur (i) plusieurs génotypes, ou (ii) des conditions de croissance différentes, ou (iii) des conditions environnementales différentes.

**12.** Procédé selon l'une quelconque des revendications 1 à 11, comprenant en outre l'utilisation de la prédiction pour la sélection d'une plante ou de sa graine, éventuellement dans lequel la sélection comprend au moins l'un parmi (a) la sélection pour la culture, (b) la sélection pour l'amélioration génétique, ou (c) la sélection pour la production de quantités commerciales.

**13.** Procédé selon l'une quelconque des revendications 1 à 12, comprenant en outre une étape de validation du modèle, ou dans lequel la construction du modèle prédictif comprend (a) l'obtention de données spectroscopiques à partir d'une ou plusieurs plantes de descendance d'une expérience de rétrocroisement par rapport à une ligne parentale végétale souhaitée ; et (b) la corrélation des données spectroscopiques avec l'une ou plusieurs plantes de descendance.

**14.** Système (90) pour estimer une caractéristique de plante, comprenant :

a. un dispositif capable de collecter des données d'absorbance spectroscopique d'une ou plusieurs plantes physiquement éloignées du dispositif ;

b. une unité de mémoire capable de stocker des données d'absorbance spectroscopiques collectées, des valeurs mesurées d'une caractéristique végétale correspondant aux données d'absorbance spectroscopiques ; et

c. un dispositif informatique (92) capable de construire un modèle prédictif en utilisant une modélisation inverse en utilisant un premier ensemble de données spectroscopiques d'une première population végétale, et des ensembles de données caractéristiques mesurées correspondants à partir de la première population végétale, et d'appliquer le modèle à un deuxième ensemble de données spectroscopiques provenant d'une deuxième plante, d'une deuxième population de plantes, ou des deux, de manière à estimer la caractéristique dans la deuxième plante.

15. Système selon la revendication 14, dans lequel le dispositif capable de collecter des données d'absorbance spectroscopique est capable de communiquer des données à l'unité de mémoire, au dispositif informatique (92), ou aux deux.

COLUMNS OF PLOTS (SAMPLES)

A          B          C

REMOTE
SENSING
SYSTEM
26

1    PLOT A1    PLOT B1    PLOT C1

GROWING
LOCATION
24

X
BLOCK
DATA

2    PLOT A2    PLOT B2    PLOT C2

ROWS
OF
PLOTS

3    PLOT A3    PLOT B3    PLOT C3

DIRECT
CONSTITUENT
MEASUREMENT
SYSTEM
28

Y
BLOCK
DATA

# FIGURE 1

FIGURE 2
X (MEASUREMENTS)

FIGURE 3

EP 2 430 500 B1

EP 2 430 500 B1

102

103 104 105 106 107

**FIGURE 4A**

FIGURE 4B

FIGURE 5

# FIGURE 6 (PRIOR ART)        FLOW CHART (10)

FIGURE 6

# FIGURE 7                    FLOW CHART (40)

FIGURE 7

## FIGURE 8        FLOW CHART (40B)

FIGURE 8

FIGURE 9A

FLOW CHART (40C)

BUILD MODEL WITH TRAINING DATA SET BY INVERSE MODELING

MULTIPLE PHENOTYPE MEASUREMENT DATA — 44

MULTIPLE RS DATA — 43

MODEL BUILDING ALGORITHM (BY INVERSE MODELING) — 42

MODEL — 45

FIG. 9B (E-E)
FIG. 9B (A-A)
FIG. 9B (C-C)

DOES PREDICTION MATCH MEASUREMENT? — 47

FIG. 9B (D-D)

NO

REVISE INPUTS TO MODEL OR REVISE MODEL — 48

YES

VALIDATE #1

VALIDATED WITH DATA FROM SAME POPULATION AS TRAINING SET? — 60

VALIDATION SET RS DATA FROM SAME POPULATION — 62

FIG. 9B (B-B)

FIGURE 9A

EP 2 430 500 B1

# FIGURE 9B    FLOW CHART (40C)

**VALIDATE #2**

FIG. 9A (A-A)
FIG. 9A (B-B)

VALIDATED WITH DATA FROM DIFFERENT POPULATION AS TRAINING SET?    64

VALIDATION SET RS DATA FROM SAME POPULATION    66

**USE TO PREDICT CONSTITUENT**

FIG. 9A (C-C)

FIG. 9A (D-D)

CONSTITUENT PREDICTION    50

ACTUAL TEST RS DATA FOR ANALYSIS    72    →    FIG. 9A (E-E)

END

FIGURE 9B

CHLOROPHYLL

FIGURE 10A

FIGURE 10B

LEAF MOISTURE

Figure 11

BACK - CROSSING

Figure 12

PHOTO SYNTHESIS

FIGURE 13

DROUGHT STRESSED VS. NON-STRESSED

FIGURE 14

PLANT BREEDING

202

SELECTION

202

ADVANCEMENT

204

INVENTORY MANAGEMENT

206

CHLOROPHYLL CONTENT (50)

LEAF MOISTURE CONTENT (50)

BACK CROSS INTROGRESSION (50)

(50)

45

PREDICTION MODEL

45

PREDICTION MODEL

45

PREDICTION MODEL

45

PREDICTION MODEL

. . .

REMOTE SENSED TEST SET

46

FIGURE 15

Figure 16

Genotype prediction

Figure 17

Figure 18

Transgenic class prediction

Figure 19

Figure 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7038191 B
- US 2006190137 A
- WO 2008097606 A
- WO 0297061 A
- WO 9420887 A
- WO 2009059176 A
- CN 101403689
- US 7112806 B
- US 435309 A, Thomas
- US 4944589 A
- US 5252829 A, Nygaard
- US 6040578 A, Malin
- US 6528809 B, Thomas
- US 6845326 B, Panigrahi
- US 6876931 B, Lorenz
- US 6871169 B, Hazen
- WO 1996032631 A
- WO 1999067722 A
- US 685040425 B

### Non-patent literature cited in the description

- **MARTENS, H.; NAES, T.** Multivariate Calibration. John Wiley & Sons
- *Eleventh International Conference On Chemometrics For Analytical Chemistry,* 04 July 2008
- **KIM H. ESBENSEN.** *Angle measure technique (AMT) for image texture characterization - 10 years conceptual development history*
- **MCCORMICK et al.** *Plant Cell Rep,* 1986, vol. 5, 81-84
- **BRO, R.** Multivariate calibration -- What is in chemometrics for the analytical chemist?. *Analytica Chimica Acta,* 2003, vol. 500, 185-194
- **HAALAND, D.; THOMAS, E.** Partial Least-Squares Methods for Spectral Analyses. 1. Relation to Other Quantitative Calibration Methods and the Extraction of Qualitative Information 2. Application to Simulated and Glass Spectral Data. *Anal. Chem.,* 1998, vol. 60, 1202-1208
- **SLAUGHTER, D.; BARRET, D.; BOERSIG, M.** Nondestructive Determination of Soluble Solids in Tomatoes using Near infrared Spectroscopy. *Journal of Food Science,* 1996, vol. 61 (4), 695-697
- **GITELSON, A.; BUSCHMANN, C.; LICHTENTHALER, H.** The Chlorophyll Fluorescence Rotation F735/F700 as an Accurate Measure of the Chlorophyll Content in Plants. *REMOTE SENS. ENVIRON.,* 1999, vol. 69, 296-302
- **MARKWELL, J.; OSTERMAN, J.; MITCHELL, J.** Calibration of the Minolta SPAD-502 Leaf Chlorophyll Meter. *PHOTOSYNTHESIS RESEARCH,* 1995, vol. 46/3, 467-472
- Assessing the Vertical Distribution of Leaf Chlorophyll Content in a Maize Crop. **MOULIN, S.; BARET, R; BRUGIER, N; BATAILE, C.** GEOSCIENCES AND REMOTE SENSING SYMPOSIUM. IEEE International, 2003, vol. 5, 3284-3286
- **AFZAL, A.; MOUSAVI, S.** Estimation of Moisture in Maize Leaf by Measuring Leaf Dielectric Constant. *Int. J. Agri. Biol.,* vol. 10, 66-68
- **HALLAUER et al.** Corn and Corn Improvement. 1998